(19) Europäisches Patentamt
European Patent Office
Office européen des brevets

(11) **EP 3 444 937 B1**

(12) **EUROPÄISCHE PATENTSCHRIFT**

(45) Veröffentlichungstag und Bekanntmachung des Hinweises auf die Patenterteilung:
**03.11.2021 Patentblatt 2021/44**

(21) Anmeldenummer: **17186974.6**

(22) Anmeldetag: **18.08.2017**

(51) Int Cl.:
*H02P 9/00* *(2006.01)*    *H02P 23/08* *(2006.01)*
*H02P 29/68* *(2016.01)*

(54) **SYSTEM UND VERFAHREN ZUM BETREIBEN EINES PUMPSPEICHERKRAFTWERKS MIT EINER DOPPELT GESPEISTEN ASYNCHRONMASCHINE**

SYSTEM AND METHOD FOR OPERATING A PUMPED-STORAGE POWER PLANT COMPRISING A DOUBLE FED INDUCTION MACHINE

SYSTÈME ET PROCÉDÉ DE FONCTIONNEMENT D'UNE CENTRALE DE POMPAGE POURVUE D'UNE MACHINE ASYNCHRONE À DOUBLE ALIMENTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.02.2019 Patentblatt 2019/08**

(73) Patentinhaber: **GE Energy Power Conversion Technology Limited**
**Rugby**
**Warwickshire CV21 1BU (GB)**

(72) Erfinder:
• **Sadowski, Piotr**
  **12277 Berlin (DE)**
• **Rothenhagen, Kai Alexaner**
  **12277 Berlin (DE)**

(74) Vertreter: **Rüger Abel Patentanwälte PartGmbB**
**Patentanwälte**
**Webergasse 3**
**73728 Esslingen a. N. (DE)**

(56) Entgegenhaltungen:
WO-A1-2008/150907    JP-A- 2002 272 191
US-A1- 2012 061 959    US-A1- 2014 361 718

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein System und Verfahren zum Betreiben eines Pumpspeicherkraftwerks mit einer doppelt gespeisten Asynchronmaschine.

Angesichts expandierender Netze zur Erzeugung und Verteilung elektrischer Energie mit steigender Anzahl von Kraftwerken unterschiedlicher Bauarten und verstärkter Nutzung regenerativer Energien gewinnen Methoden zur Speicherung elektrischer Energie zunehmend an Bedeutung. Pumpspeicherkraftwerke werden als eines der wichtigsten, zuverlässigsten und effektivsten Speichersysteme für elektrische Energie angesehen. Bei einem Pumpspeicherkraftwerk wird bspw. ein oberes Wasserreservoir unter Einsatz elektrischer Energie mit Pumpen aufgefüllt, wobei der verwendete Pumpstrom hierzu in Zeiten geringer Netzbelastung zu relativ niedrigen Preisen bezogen wird. In Zeiten eines hohen Leistungsbedarfes kann die potentielle Energie des Wassers dann mittels einer Turbine in mechanische Drehenergie zum Antreiben eines Generators verwendet werden, um daraus elektrische Energie zu generieren und in das elektrische Netz einzuspeisen. Die gewonnene Spitzenlast-Energie kann häufig zu relativ viel höheren Preisen wieder verkauft werden. Eine möglichst effiziente und verlustarme Nutzung des variierenden Leistungsangebots des elektrischen Netzes ist von enormer Wichtigkeit.

Der Generator, der im Turbinenbetrieb die elektrische Energie erzeugen kann, kann auch als Antriebsmotor für die Pumpen oder Pumpenturbinen auf der gleichen Welle dienen. Als Motor-Generator-Vorrichtungen für Pumpspeicherkraftwerke sind doppelt gespeiste Asynchronmaschinen (engl. Double Fed Induction Machines, DFIGs) besonders geeignet, die Streifringrotor-Asynchronmaschinen sind, die sowohl über Stator- als auch über Rotoranschlüsse gespeist sind. Im Einsatz ist der Stator der Asynchronmaschine direkt mit einem elektrischen Netz verbunden, während der Rotor über einen Frequenzumrichter, der zur Regelung der Drehzahl, der Wirk- und Blindleistung dient, mit dem Netz verbunden ist. Dies ermöglicht einen übersynchronen sowie einen untersynchronen Betrieb zur Netzfrequenz und damit ist die Generatordrehzahl variabel. Nur ein Teil der Leistung muss über den Umrichter an die gewünschte Frequenz und Leistung angepasst werden. Insofern kann der Umrichter kleiner, kostengünstiger und verlustärmer als ein vergleichbarer Synchrongenerator gebaut werden, woraus sich auch ein besserer Wirkungsgrad des Systems insgesamt ergibt. Zu weiteren Vorteilen der doppelt gespeisten Asynchronmaschine gegenüber Synchronmaschinen gehören auch ein hoher Betriebswirkungsgrad unter Teillast, die Fähigkeit zur getrennten Regelung der Blindleistung und der Wirkleistung, die Fähigkeit zur Leistungsfaktorsteuerung und eine schnelle Systemantwortzeit.

Ein Nachteil von doppelt gespeisten Asynchronmaschinen ist, dass bei einem Betrieb mit zunehmender Nähe zu ihrer Synchrondrehzahl die zyklische Wärmebelastung der Komponenten deutlich steigt. Insbesondere sind Halbleitervorrichtungen, die in der Leistungselektronik der Umrichter verwendet werden, für beträchtliche Sperrschichttemperaturschwankungen anfällig, welche aus dem Betrieb der Maschine nahe um die Synchrondrehzahl resultieren, wodurch die Lebensdauer der Umrichter reduziert werden könnte. Da die Frequenz des Rotorstroms in einer doppelt gespeisten Asynchronmaschine durch die Statorflussfrequenz, somit die Netzfrequenz, und die Rotordrehzahl bestimmt ist und ein Betrieb nahe an der Synchrondrehzahl zu einer niedrigen Rotorstromfrequenz führt, rufen diese Rotorströme eine beträchtlichen Wärmebelastung der Halbleitervorrichtungen hervor. Insofern ist ein Betrieb innerhalb eines vordefinierten Totbandes um die synchrone Drehzahl herum für die doppelt gespeiste Asynchronmaschine zu vermeiden.

Es ist bekannt, dass die maximale Temperatur von Leistungshalbleitern, z.B. IGBTs und Dioden, die in dem Umrichter verwendet werden, bei niedrigeren Rotorstromfrequenzen und sonst gleichbleibenden Betriebsbedingungen ansteigen. Je niedriger die Rotorstromfrequenz, desto höher ist auch die Schwankung der Sperrschichttemperatur der Halbleiter, die Spitzenwerte erreicht, wenn der Halbleiter leitet. Es ist ferner bekannt, dass in der Nähe der Synchrondrehzahl sich die Leistungsverluste ungleichmäßig auf die Halbbrücken der Umrichter verteilen.

Um diese Probleme zu bewältigen, sind verschiedene Strategien vorgeschlagen worden, um einen Betrieb der doppelt gespeisten Asynchronmaschine in einem festen Totband um die synchrone Drehzahl herum zu vermeiden oder einen anderen, suboptimalen Betriebspunkt zu wählen. Das unzulässige synchrone Totband wird speziell in Abhängigkeit von der jeweiligen Anlage und deren Komponenten vor der Inbetriebnahme festgelegt. Beide Strategien können für Betreiber von Pumpspeicherkraftwerken deutliche Effizienz- und betriebswirtschaftliche Einbußen zur Folge haben. Ein weiter Bereich, in dem die Energie des elektrischen Netzes nicht oder nicht optimal genutzt werden kann, kann für Betreiber von Pumpspeicherkraftwerken inakzeptabel sein. Diese Unzulänglichkeit ist folglich zu vermeiden oder zumindest zu reduzieren.

Tan Yingjie et al., "Deadband Control of Doubly-Fed Induction Generator around Synchronous Speed", IEEE Transactions on Energy Conversion, Vol. 31, No. 4, Seiten 1610-1621, Dezember 2016, beschreiben ein Verfahren zur Verhinderung eines Betriebs innerhalb eines vordefinierten Totbandes um die Synchrondrehzahl herum für eine doppelt gespeiste Asynchronmaschine in einem Windkraftwerk. Es wird vorgeschlagen, eine für den Überspannungsschutz vorgesehene Klemmschaltung (sog. Crowbar), die eine zwischen dem Rotorkreis und Masse geschaltete Reihenschaltung aus einem Schaltelement und einem Widerstand aufweist, im Falle eines Betriebs innerhalb des vordefinierten Totbandes zu aktivieren, um den Rotor über die Klemmschaltung kurzzuschließen. Damit wird der Betriebsmodus des doppelt gespeisten Asynchrongenerators (DFIG-Modus) in einen reinen Asynchrongeneratormodus (IG-Modus) gewechselt. Hierzu wird auch das elektromagnetische Drehmoment entsprechend angepasst, so dass der Betriebspunkt von dem optimalen Betriebspunkt weg zu einem neuen Betriebspunkt in dem IG-Modus verschoben wird, bevor die Klemmschaltung aktiviert wird. Somit kann ein kontinuierlicher Betrieb, wenngleich in einem leicht suboptimalen Betriebsbereich, sichergestellt werden.

US 2014/0361718 A1 beschreibt eine Vorrichtung und ein Verfahren zur variablen Drehzahlsteuerung für ein Antriebssystem mit doppelt gespeister Synchronmaschine, wobei bestimmt wird, ob ein Drehzahlsollwert ein im Voraus festgelegtes unzulässiges synchrones Totband passiert und ein Passieren des Totbandes in Abhängigkeit davon verboten oder zugelassen wird, ob eine Wirkkomponente des Rotorstromsollwertes einen bestimmten Stromgrenzwert überschreitet. Eine Hysteresisfunktionseinrichtung sorgt dafür, dass der Drehzahlsollwert auf einem Drehzahlbereichsgrenzwert des Totbandes gehalten wird, bevor ein Passieren des Totbandes zugelassen wird, um die Zeitdauer des Passierens des Totbandes zu verkürzen.

JP 2002 272191 A beschreibt eine Weiterbildung der Vorrichtung und des Systems aus der US 2014/0361718 A1, wobei das Totband in Abhängigkeit von der aktuell erfassten Systemfrequenz anstelle einer fest vorgegebenen Synchronfrequenz bestimmt wird, so dass die erfasste Systemfrequenz die Mittenfrequenz des Totbandes bildet, das eine fest vorgegebene Bandbreite aufweist. Somit werden Schwankungen der Systemfrequenz insofern berücksichtigt, als das Totband gemeinsam mit der Systemfrequenz in der Lage verschoben wird.

Ausgehend hiervon ist es eine Aufgabe der vorliegenden Erfindung, Maßnahmen vorzuschlagen, um einen möglichst effizienten Betrieb von Pumpspeicherkraftwerken mit doppelt gespeisten Asynchronmaschinen zu ermöglichen. Insbesondere ist es eine Aufgabe der Erfindung, ein Verfahren und ein System zum Betreiben eines Pumpspeicherkraftwerks mit einer doppelt gespeisten Asynchronmaschine zu schaffen, die die Bereitstellung einer möglichst optimalen Regelleistung in dem Leistungsregelbereich der Maschine unter Minimierung der mit dem synchronen Totband verbundenen Effizienz- und Wirtschaftlichkeitseinbußen ermöglichen.

Diese Aufgabe wird durch das Verfahren und das System zum Betreiben eines Pumpspeicherkraftwerks mit einer doppelt gespeisten Asynchronmaschine mit den Merkmalen des Anspruchs 1 bzw. 12 gelöst.

Gemäß einem ersten Aspekt der Erfindung ist ein Verfahren zum Betreiben eines Pumpspeicherkraftwerks mit einer doppelt gespeisten Asynchronmaschine geschaffen, die einen Stator (Ständer), der mit einem elektrischen Netz direkt verbunden ist, und einen Rotor (Läufer) aufweist, der über einen Umrichter mit dem elektrischen Netz verbunden ist. Das Verfahren weist ein Bestimmen eines aktuellen Sollwertes für eine Rotorstromfrequenz oder eine mechanische Drehzahl des Rotors basierend auf einer zwischen dem elektrischen Netz und der doppelt gespeisten Asynchronmaschine zu übertragenden Sollleistung in Abhängigkeit von gemessenen aktuellen Betriebsgrößen auf. Das Verfahren weist ferner ein Bestimmen einer oder mehrerer einen momentanen Zustand des Pumpspeicherkraftwerks kennzeichnenden Größen und ein Bestimmen eines momentanen unzulässigen synchronen Totbands, das durch eine minimal für den stationären Betrieb erforderliche Rotorstromfrequenz bzw. Drehzahldifferenz der Rotordrehzahl von der Synchrondrehzahl bestimmt ist, in Abhängigkeit von der einen oder den mehreren den momentanen Zustand des Pumpspeicherkraftwerks kennzeichnenden Größen in einer derartigen Weise, dass das momentane unzulässige synchrone Totband entsprechend dem aktuellen Zustand des Pumpspeicherkraftwerks minimiert wird, auf. Das Verfahren weist ferner ein Ansteuern des Umrichters auf, um pulsartig sinusförmige Spannungen und Ströme mit dem aktuellen Sollwert der Rotorstromfrequenz an den Rotor zu schalten, wenn der aktuelle Sollwert der Rotorstromfrequenz bzw. der mechanischen Rotordrehzahl nicht stationär in das momentane minimierte unzulässige synchrone Totband fällt.

Gemäß der Erfindung wird das momentan unzulässige synchrone Totband um die Rotornullfrequenz bzw. die synchrone Drehzahl herum, in dem ein stationärer Betrieb der doppelt gespeisten Asynchronmaschine vermieden werden sollte, um Beeinträchtigungen und Beschädigungen der Komponenten zu vermeiden, im Betrieb in Abhängigkeit von dem jeweiligen aktuellen Zustand des Pumpenspeicherkraftwerks stets aktuell, dynamisch ermittelt. "Stationär" bedeutet in diesem Zusammenhang einen Betrieb für eine Zeitdauer, bei der es zu keiner merklichen Überlastung und eventuellen Beschädigung von verwendeten Halbleiterbauelementen oder anderen kritischen Bauelementen kommt. Insbesondere kann "stationär" hierin überall einen Betrieb für eine Zeitdauer im Bereich der thermischen Zeitkonstante der verwendeten Halbleiterbauelemente oder anderer kritischer Bauelemente bedeuten. Diese kann im Bereich einiger Millisekunden bis Sekunden liegen. Ein Durchfahren des unzulässigen synchronen Totbands innerhalb einer relativ unkritischen Zeitdauer, insbesondere bei Minimierung des Totbands, kann zugelassen werden.

Mit der Erfindung kann das synchrone Totband somit variabel auf die jeweils vorhandenen Gegebenheiten angepasst und insbesondere entsprechend dem aktuellen Zustand des Kraftwerks minimiert werden, um einen gefahrlosen Betrieb auch in der Nähe der synchronen Frequenz in einem Abschnitt des Regelbereichs der Asynchronmaschine zuzulassen, der bei einem fest vorgegebenen Totband ausgeschlossen wäre. Der Leistungsregelbereich der doppelt gespeisten Asynchronmaschine und die Kapazität des Pumpspeicherkraftwerks können somit besser ausgenutzt werden. Dies hat

5      EP 3 444 937 B1      6

geringere Leistungseinbuße bzw. eine höhere Effizienz und Wirtschaftlichkeit des Pumpspeicherkraftwerks zur Folge.

In dem vorstehend erwähnten Verfahren kann der aktuelle Sollwert der Rotorfrequenz bzw. der mechanischen Drehzahl oder die für den stationären Betrieb zulässige minimal erforderliche Rotorfrequenz bzw. mechanische Drehzahl oder können beide bspw. in Abhängigkeit von einer oder mehreren der folgenden aktuell gemessenen Betriebsgrößen bestimmt werden: Phasenströme im Statorkreis, Phasenspannungen im Statorkreis, Ströme auf der Netzseite im Rotorkreis und/oder Rotordrehzahl. Daraus können der gewünschte Rotorstrom und die gewünschte Rotorspannung mit der Sollfrequenz bzw. die Solldrehzahl bestimmt werden. Es können auch andere Größen, wie bspw. das Rotordrehmoment berücksichtigt werden.

Die eine oder mehreren einen momentanen Zustand des Pumpspeicherkraftwerks kennzeichnenden Größen werden vorzugsweise kontinuierlich erfasst und/oder bestimmt. Der aktuelle Zustand wird dann laufend überwacht, um eine kontinuierliche Anpassung des synchronen Totbandes zu ermöglichen. Alternativ können diese Größen auch periodisch in einem geeigneten Intervall, um den Zustand des Pumpspeicherkraftwerks möglichst aktuell zu verfolgen, oder als Reaktion auf erfasste Zustandsänderungen, z.B. eine geänderte Lastanforderung, erfasst und/oder bestimmt werden.

Um den momentanen Zustand des Pumpspeicherkraftwerks adäquat zu erfassen, können insbesondere eine oder mehrere der folgenden kennzeichnenden Größen überwacht werden: Spannungen auf der Maschinenseite des Umrichters, Ströme auf der Maschinenseite des Umrichters, Rotorstromfrequenz, Leistungsfaktor auf der Maschinenseite des Umrichters, Spannung an einem Gleichspannungszwischenkreis des Umrichters, Pulsmuster zur Ansteuerung des Umrichters, Taktfrequenz zur Ansteuerung des Umrichters, Umgebungstemperatur des Umrichters, Kühlwassertemperatur und/oder -durchfluss bei Wasserkühlung des Umrichters. All diese Größen beeinflussen den aktuellen Zustand des Pumpspeicherkraftwerks und insbesondere die thermische Belastung der Rotorwicklungen der doppelt gespeisten Asynchronmaschine und der Leistungshalbleiterschalter des Umrichters. Bspw. wirken sich diese Größen auf die Höhe und Schwankungsbreite der Temperatur der Sperrschicht der Leistungshalbleiterschalter und somit auf deren Lebensdauer aus. Derartige Zusammenhänge sind in der Technik allgemein bekannt und können hier einzeln oder in beliebiger Kombination berücksichtigt werden, um den momentanen Zustand des Pumpspeicherkraftwerks möglichst genau abzuschätzen und daraus ein minimiertes synchrones Totband zu bestimmen.

Zur Bestimmung des aktuellen Zustands des Pumpspeicherkraftwerks können ferner feste Parameter oder Einflussgrößen herangezogen werden, zu denen eine oder mehrere der folgenden gehören können: Bauart der eingesetzten Halbleiterschalter in dem Umrichter, Bemessung des Umrichters, eingesetzte Leistungshalbleiterbeschaltungen (z.B. Snubber-Glieder) und/oder Wärmewiderstände und Wärmekapazitäten innerhalb der Komponenten. Diese invariablen Größen beeinflussen ebenfalls die thermische Belastung der Leistungshalbleiterschalter und anderer Komponenten des Systems und wirken sich somit auf den aktuellen Zustand des Pumpspeicherkraftwerks aus.

Die Beziehungen oder Korrelationen zwischen den einen momentanen Zustand des Pumpspeicherkraftwerks kennzeichnenden Größen und dem unzulässigen synchronen Totband können als Funktionen, Nachschlagetabellen, implementierte Algorithmen, Systemmodelle oder in anderer entsprechender Weise im Voraus abgespeichert und im Betrieb online verwendet werden. Durch Verwendung einer Kombination einer beliebigen Anzahl derartiger kennzeichnender Größen und Beziehungen kann die Komplexität zur Bestimmung des optimalen synchronen Totbands je nach Wunsch oder Anforderung gewählt werden.

Gemäß bevorzugten Ausführungsformen des erfindungsgemäßen Verfahrens wird in dem Fall, dass der aktuelle Sollwert der Rotorstromfrequenz bzw. der mechanischen Drehzahl in das aktuelle unzulässige synchrone Totband fällt, vorzugsweise eine Abhilfemaßnahme zur Fortführung des Betriebs unter Vermeidung eines Betriebs innerhalb des Totbandes eingeleitet. Alternativ oder zusätzlich kann in diesem Fall auch eine Meldung an eine übergeordnete Steuerung gesandt werden, die dann bedarfsweise entsprechende Abhilfemaßnahmen treffen kann.

In bevorzugten Ausführungsformen wird die einzuleitende Abhilfemaßnahme zur Vermeidung eines Betriebs innerhalb des Totbandes in Abhängigkeit von einem Präferenzsignal oder -parameter ausgewählt. Das Präferenzsignal kann von außen, bspw. von einer zentralen Leitstelle dem Kraftwerk zugeführt und im Bedarfsfalle ausgewertet werden. Es kann auch ein im Voraus festgelegter und abgespeicherter Präferenzparameter sein, der eine oder mehrere bevorzugte Abhilfemaßnahmen vorgibt.

Alternativ oder zusätzlich kann die einzuleitende Abhilfemaßnahme zur Vermeidung eines Betriebs innerhalb des Totbandes durch Vergleich verschiedener möglicher Abhilfemaßnahmen unter Berücksichtigung deren Auswirkungen auf das unzulässige synchrone Totband und gegebenenfalls anderer Kriterien, wie bspw. Wirtschaftlichkeit des Betriebs, ermittelt werden.

In vorteilhaften Ausführungsformen der Erfindung sieht die Abhilfemaßnahme eine Reduzierung des aktuellen synchronen Totbandes durch Veränderung des Zustands des Pumpspeicherkraftwerks vor. Dies kann anhand einer oder mehrerer der folgenden Maßnahmen erzielt werden: Verringerung einer Taktfrequenz zur Ansteuerung des Umrichters, Wechseln des Pulsmusters zur Ansteuerung des Umrichters, Verringerung einer Spannung an einem Gleichspannungszwi-

4

schenkreis des Umrichters, Reduzierung der geregelten Blindleistung des Umrichters, Veränderung einer Kühlwassertemperatur und/oder eines Kühlwasserdurchflusses bei Wasserkühlung des Umrichters und/oder Verringerung der Umgebungstemperatur in einem Umrichterraum unter Verwendung einer Luftkühlanlage. Diese Maßnahmen zielen darauf ab, die thermische Belastung der Halbleiterschalter des Umrichters und/oder anderer involvierter Komponenten zu reduzieren und somit einen kontinuierlichen Betrieb mit einem engeren synchronen Totband zu ermöglichen. Bspw. ist es allgemein bekannt, dass niedrigere Taktfrequenzen der Halbleiterschalter des Umrichters geringere maximale Temperaturen der Halbleiterschalter zur Folge haben. Ferner ist es allgemein bekannt, dass in unterschiedlichen Betriebsmodi einer doppelt gespeisten Asynchronmaschine unterschiedliche Modulationsverfahren zur Ansteuerung der Leistungshalbleiterschalter des Umrichters, einschließlich unterschiedlicher Pulsweitenmodulations(PWM)-Arten, unterschiedliche Leistungsverluste der Halbleiterelemente des Umrichters zur Folge haben und unterschiedliche zulässige Ausgangsströme ermöglichen. Dies kann zur Reduzierung der thermischen Belastung der Halbleiterelemente genutzt werden. Außerdem kann durch eine Reduktion der Regelung der Blindleistung in dem maschinenseitigen Teilumrichter der Leistungsfaktor erhöht werden, wobei durch Reduktion des Stroms die Last und Temperatur insbesondere an den Komponenten des maschinenseitigen Teilumrichters verringert werden. Insgesamt kann durch eine Reduktion der thermischen Belastung der Komponenten des Systems dessen Zustand derart verändert werden, dass das aktuelle unzulässige synchrone Totband ohne Gefahr weiter verschmälert und ein stufenloser Betrieb des Kraftwerks in einem größeren Bereich erreicht werden kann. Eine weitgehend stufenlose Regelung der doppelt gespeisten Asynchronmaschine ist insbesondere im Pumpbetrieb wichtig.

Wenn der Zustand des Systems durch eine oder mehrere der vorstehend erwähnten Abhilfemaßnahmen verändert wird, kann dies geringfügige Nachteile bzw. Beeinträchtigungen zur Folge haben, zu denen erhöhte Harmonische der an den Rotor geschalteten Spannungen und Ströme, höhere Stromrippel, eine geringere verfügbare Blindleistung und erhöhte Hilfsverluste aufgrund der Wasserkühlung oder des Einsatzes einer Luftkühlanlage gehören. Während die Erhöhung der Effizienz und der Wirtschaftlichkeit des Systems letztere im Allgemeinen überwiegen wird, können in einer Weiterbildung des erfindungsgemäßen Verfahrens zusätzliche Ausgleichsmaßnahmen vorgesehen sein, um die mit der oder den Abhilfemaßnahmen verbundenen Nachteile bzw. Beeinträchtigungen zu mildern. Bspw. kann die Taktfrequenz oder das Pulsmuster zur Ansteuerung des Umrichters verändert werden, um Harmonische und/oder Stromrippel zu reduzieren. Alternativ oder zusätzlich kann in dem Fall, dass die in dem maschinenseitigen Teilumrichter geregelte Blindleistung reduziert wird, um die Wärmebelastung zu reduzieren, der kleinere verfügbare Blindleistungsbereich durch Verwendung eines netzseitigen Teilumrichters kompensiert werden. Noch weiter kann/ können der kleinere verfügbare Blindleistungsbereich und/oder eine reduzierte Wirkleistung in einer doppelt gespeisten Asynchronmaschine unter Verwendung wenigstens einer weiteren doppelt gespeisten Asynchronmaschine, die bspw. mit einer weiteren Pumpe bzw. Turbine des Kraftwerksystems in Antriebsverbindung steht, kompensiert werden.

Gemäß einem weiteren Aspekt der Erfindung ist ein System zum Betreiben eines Pumpspeicherkraftwerks mit einer doppelt gespeisten Asynchronmaschine geschaffen, die einen Stator, der mit einem elektrischen Netz direkt verbunden ist, und einen Rotor aufweist, der über einen Umrichter mit dem elektrischen Netz verbunden ist, und mit einer Pumpen-/ Turbineneinrichtung, die mit der doppelt gespeisten Asynchronmaschine antriebsmäßig verbunden ist. In einem Motorbetrieb der doppelt gespeisten Asynchronmaschine wird die Pumpen-/ Turbineneinrichtung durch diese angetrieben, um elektrische Energie des elektrischen Netzes in potentielle Energie eines gepumpten Wassers zu wandeln, während in einem Generatorbetrieb umgekehrt potentielle Energie des Wassers in mechanische Drehenergie zum Antreiben der doppelt gespeisten Asynchronmaschine umgewandelt wird, um elektrische Energie zu generieren und in das elektrische Netz einzuspeisen. Das System zum Betreiben des Pumpspeicherkraftwerks weist eine Sensoreinrichtung zur Messung aktueller Betriebsgrößen auf, zu denen Ströme und Spannungen in einem Statorkreis und einem Rotorkreis und gegebenenfalls die Rotordrehzahl gehören. Das System weist ferner eine Steuereinrichtung zur Steuerung des Betriebs des Pumpspeicherkraftwerks auf, die mit der Sensoreinrichtung kommunikationsmäßig verbunden ist, um von dieser aktuelle Messwerte der Betriebsgrößen zu erhalten. Die Steuereinrichtung ist eingerichtet, um einen aktuellen Sollwert für eine Rotorstromfrequenz oder eine mechanische Drehzahl des Rotors basierend auf einer zwischen dem elektrischen Netz und der doppelt gespeisten Asynchronmaschine zu übertragenden Sollleistung in Abhängigkeit von den gemessenen aktuellen Betriebsgrößen zu bestimmen. Die Steuereinrichtung ist ferner eingerichtet, um eine oder mehrere einen momentanen Zustand des Pumpspeicherkraftwerks kennzeichnende Größen zu bestimmen und ein momentanes unzulässiges synchrones Totband, das durch für den stationären Betrieb zulässige minimal erforderliche Rotorstromfrequenz ($\Delta f$) bzw. Drehzahldifferenz ($\Delta n$) der Rotordrehzahl von der Synchrondrehzahl bestimmt ist, in Abhängigkeit von der einen oder den mehreren den momentanen Zustand des Pumpspeicherkraftwerks kennzeichnenden Größen in einer derartigen Weise zu bestimmen, dass das momentane unzulässige synchrone Totband entsprechend dem aktuellen Zustand des Pumpspeicherkraftwerks minimiert wird. Die Steuereinrichtung ist ferner eingerichtet, um den Umrichter anzusteuern, um pulsartig sinusförmige Spannungen und Ströme mit dem aktuellen Sollwert der Rotorstromfrequenz an den Rotor zu schalten, wenn der Sollwert der Rotorstromfrequenz bzw. der mechanischen Rotordrehzahl nicht stationär in das momentane minimierte unzulässige Totband fällt.

Somit stellt das System sicher, dass ein Betrieb in einem unzulässigen synchronen Totband um die Stator- bzw. Synchronfrequenz bzw. -drehzahl herum vermieden wird, um eine unzulässige Belastung und Beeinträchtigung von Komponenten des Systems und Reduktion der Lebensdauer derselben zu vermeiden. Dabei wird das synchrone Totband stets aktuell, online im Betrieb ermittelt, so dass es unter den aktuellen Bedingungen des Pumpspeicherkraftwerks variabel minimiert werden kann. Dies erhöht die mögliche Leistungsausbeute und Effizienz des Pumpspeicherkraftwerks, vergrößert den nutzbaren Leistungsregelbereich der doppelt gespeisten Asynchronmaschine und erhöht die Wirtschaftlichkeit des Systems. Im Übrigen gelten hinsichtlich der Vorteile und möglicher Weiterbildungen des Systems die vorstehenden Ausführungen zu denjenigen des Verfahrens hier entsprechend.

Insbesondere kann in bevorzugten Ausführungsformen des Systems der aktuelle Zustand des Pumpspeicherkraftwerks anhand erfasster oder bestimmter kennzeichnender Größen abgeschätzt werden, zu denen eine oder mehrere der folgenden Größen gehören können: Spannungen auf der Maschinenseite des Umrichters, Ströme auf der Maschinenseite des Umrichters, Rotorstromfrequenz, Leistungsfaktor auf der Maschinenseite des Umrichters, Spannung an einem Gleichspannungszwischenkreis des Umrichters, Pulsmuster zur Ansteuerung des Umrichters, Taktfrequenz zur Ansteuerung des Umrichters, Umgebungstemperatur des Umrichters, Kühlwassertemperatur und/oder Kühlwasserdurchfluss bei Wasserkühlung des Umrichters und andere.

Die Steuereinrichtung ist dann vorzugsweise eingerichtet, um den momentanen Zustand des Pumpspeicherkraftwerks anhand von Beziehungen zwischen den kennzeichnenden Größen und dem unzulässigen synchronen Totband zu bestimmen, wobei die Beziehungen als Funktionen, Nachschlagetabellen, implementierte Algorithmen oder in sonstiger geeigneter Weise definiert und in einem Speicher vorabgespeichert sein können.

Zusätzlich kann die Steuereinrichtung eingerichtet sein, um in dem Fall, dass der ermittelte Sollwert der Rotorstromfrequenz in das unzulässige synchrone Totband fällt, eine Abhilfemaßnahme zur Vermeidung eines Betriebs innerhalb des Totbandes einzuleiten, wobei die Abhilfemaßnahme vorzugsweise eine Reduzierung des synchronen Totbandes durch Veränderung des Zustands des Pumpspeicherkraftwerks umfasst. Hierzu können eine oder mehrere der folgenden Maßnahmen ergriffen werden: Verringerung einer Taktfrequenz zur Ansteuerung des Umrichters, Wechseln des Pulsmusters zur Ansteuerung des Umrichters, Verringerung einer Spannung an einem Gleichspannungszwischenkreis des Umrichters, Reduzierung der geregelten Blindleistung des Umrichters, Veränderung einer Kühlwassertemperatur und/oder eines Kühlwasserdurchflusses bei Wasserkühlung des Umrichters, Verringerung der Umgebungstemperatur in einem Umrichterraum unter Verwendung einer Luftkühlanlage und andere. Die Steuereinrichtung kann die Auswirkung von einer oder mehreren dieser Abhilfemaßnahmen auf den Zustand des Pumpspeicherkraftwerks und das resultierende Totband abschätzen und dann die geeignete Abhilfemaßnahme oder eine Kombination der Abhilfemaßnahmen auswählen und einleiten, um den Betrieb bei reduziertem synchronen Totband ohne Gefahr für die Komponenten fortzusetzen.

Dabei ist die Steuereinrichtung vorzugsweise dazu eingerichtet, die einzuleitende Abhilfemaßnahme zur Vermeidung eines Betriebs innerhalb des Totbandes in Abhängigkeit von einem Präferenzsignal oder -parameter auszuwählen, das bzw. der von außen, bspw. von einer zentralen Kontrollstelle aus zugeführt oder im Voraus festgelegt und in einem Speicher der Steuereinrichtung gespeichert werden kann.

Alternativ kann die Steuereinrichtung dazu eingerichtet sein, die einzuleitende Abhilfemaßnahme zur Vermeidung eines Betriebs innerhalb des Totbandes durch Vergleich verschiedener möglicher vorgegebener Abhilfemaßnahmen unter Berücksichtigung deren Auswirkungen auf das unzulässige synchrone Totband sowie gegebenenfalls weiterer Kriterien zu ermitteln.

In bevorzugten Ausführungsformen eines beliebigen vorstehend erwähnten Systems weist der Umrichter einen netzseitigen Teilumrichter und einen maschinenseitigen Teilumrichter auf, die über einen Gleichspannungszwischenkreis miteinander verbunden sind. Die Steuereinrichtung kann eingerichtet sein, um die doppelt gespeiste Asynchronmaschine durch Reduktion der durch den maschinenseitigen Teilumrichter geregelten Blindleistung mit reduziertem synchronen Totband zu betreiben und den reduzierten verfügbaren Blindleistungsbereich durch eine modifizierte Ansteuerung des netzseitigen Teilumrichters zu kompensieren.

In vorteilhaften Weiterbildungen des Systems einer beliebigen vorstehend erwähnten Art kann das Pumpspeicherkraftwerk eine erste doppelt gespeiste Asynchronmaschine, die über einen ersten Umrichter mit dem elektrischen Netz verbunden und mit einer ersten Pumpen-/Turbineneinrichtung antriebsmäßig gekoppelt ist, und wenigstens eine zweite doppelt gespeiste Asynchronmaschine aufweisen, die über einen zweiten Umrichter mit dem elektrischen Netz verbunden und mit einer zweiten Pumpen-/ Turbineneinrichtung antriebsmäßig gekoppelt ist, wobei die Steuereinrichtung eine erste Steuereinheit, die der ersten doppelt gespeisten Asynchronmaschine zugeordnet ist, und wenigstens eine zweite Steuereinheit aufweisen kann, die der wenigstens einen zweiten doppelt gespeisten Asynchronmaschine zugeordnet ist. Die erste und die zweite Steuereinheit können direkt oder über eine übergeordnete Optimierungseinrichtung miteinander kommunikationsmäßig verbunden sein. Sie können dazu eingerichtet sein, bedarfsweise zu bewirken, dass wenigstens eine der doppelt gespeisten Asynchronmaschinen durch Veränderung des Zustands des Pumpspeicherkraftwerks mit reduziertem synchronen Totband betrieben wird, während wenigstens eine der anderen doppelt gespeisten Asynchronmaschinen in einem normalen Betriebsmodus betrieben wird. Alternativ oder zusätzlich können die erste und die zweite Steuereinheit oder die übergeordnete Optimierungseinrichtung eingerichtet sein, um zu bewirken, dass eine von dem elektrischen Netz vorgegebene Wirk- und/der Blindleistungsanforderung asymmetrisch auf die erste und die wenigstens eine zweite doppelt gespeiste Asynchronmaschine verteilt wird, um einen Betrieb der doppelt gespeisten Asynchronmaschinen ohne Leistungseinbuße in einem unzulässigen synchronen Totband zu vermeiden. Die Entscheidung über die einzuleitende Abhilfemaßnahme kann, wie bereits oben erwähnt, in bevorzugten Ausführungsformen in Abhängigkeit von einem von außen bereitgestellten Präferenzsignal oder einem vorgespeicherten internen Präferenzparameter oder auch anhand von Wirksamkeitsüberlegungen getroffen werden.

Weitere vorteilhafte Einzelheiten von Ausführungsformen der Erfindung ergeben sich aus Unteransprüchen, der Zeichnung sowie der zugehörigen Beschreibung. Die Erfindung ist nachstehend anhand einer Zeichnung näher beschrieben, die beispielhafte, keinesfalls beschränkende Ausführungsformen der Erfindung zeigt, wobei gleiche Bezugszeichen in allen Figuren verwendet werden, um gleiche Elemente zu bezeichnen. Es zeigen:

Fig. 1 ein beispielhaftes Pumpspeicherkraftwerk mit einer doppelt gespeisten Asynchronmaschine gemäß einer Ausführungsform der Erfindung, in Form eines stark vereinfachten Blockdiagramms;

Fig. 2 eine beispielhafte Kennlinie, die die Pumpleistung im Vergleich zu der Rotordrehzahl und der Rotorstromfrequenz für ein Pumpspeicherkraftwerk mit doppelt gespeister Asynchronmaschine veranschaulicht, in einer Prinzipdarstellung;

Fig. 3 ein Flussdiagramm eines Verfahrens zum Betreiben eines Pumpspeicherkraftwerks mit doppelt gespeister Asynchronmaschine, bspw. des Pumpspeicherkraftwerks nach Fig. 1, gemäß einer Ausführungsform der Erfindung, in vereinfachter Darstellung;

Fig. 4 ein Flussdiagramm einer modifizierten Ausführungsform des Betriebsverfahrens nach Fig. 3, in vereinfachter Darstellung; und

Fig. 5 ein Blockdiagramm einer weiteren Ausführungsform eines Systems und Verfahrens zum Betreiben eines Pumpspeicherkraftwerks mit doppelt gespeister Asynchronmaschine, in stark vereinfachter prinziphafter Blockdiagrammdarstellung.

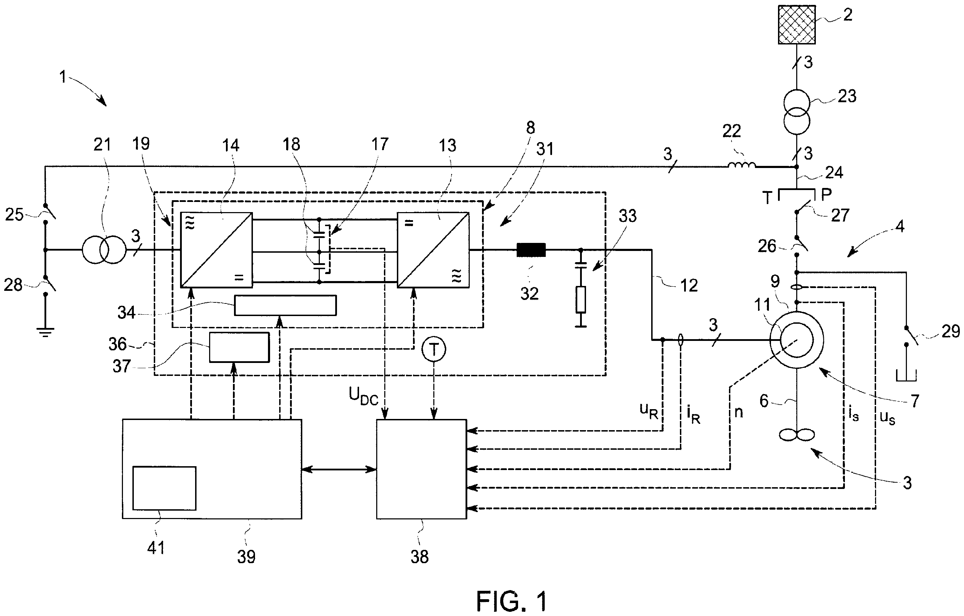

In Fig. 1 ist in stark vereinfachter Blockdiagrammdarstellung ein Pumpspeicherkraftwerk 1 zur Speicherung elektrischer Energie aus einem elektrischen Netz 2 in Form potentieller Energie eines hier nicht näher veranschaulichten gepumpten Wassers und zur bedarfsweisen Wiedereinspeisung elektrischer Energie, die ausgehend von der potentiellen Energie des gepumpten Wassers gewonnen wird, in das elektrische Netz 2. Hierzu ist das Pumpspeicherkraftwerk 1 mit einer Pumpen-/Turbineneinrichtung 3 versehen, die mit einer doppelt gespeisten Asynchronmaschine 4 antriebsmäßig verbunden ist. Wenngleich hier lediglich eine einzige Pumpen-/Turbineneinrichtung symbolhaft veranschaulicht ist, wie sie über eine Antriebswelle 6 mit der Asynchronmaschine 4 verbunden ist, können mit dieser auch mehrere Pumpen-/Turbineneinrichtungen über eine gemeinsame Antriebswelle 6 gekoppelt sein. Außerdem können sowohl integrierte Pumpenturbinen als auch gesonderte Pumpen und Turbinen verwendet werden, die jeweils speziell für den Pump- bzw. den Turbinenbetrieb optimiert sind.

Die doppelt gespeiste Asynchronmaschine 4 weist im Wesentlichen eine Motor-Generator-Einrichtung 7 und einen Frequenzumrichter 8 auf. Die Motor-Generator-Einrichtung 7 weist in üblicher Weise einen Ständer bzw. Stator 9, der mit hier nicht näher dargestellten Statorwicklungen versehen ist, und einen Läufer bzw. Rotor 11 auf, der von dem Stator umgeben ist und hier nicht näher dargestellte Rotorwicklungen trägt. Der Rotor ist als Schleifringrotor ausgebildet.

Der Asynchrongenerator 7 wird sowohl über Stator- als auch über Rotoranschlüsse gespeist, woraus die Bezeichnung der doppelt gespeisten Asynchronmaschine herrührt. In der in Fig. 1 dargestellten Konfiguration der doppelt gespeisten Asynchronmaschine 4 ist der Stator direkt mit dem elektrischen Netz 2 verbunden bzw. verbindbar, während der Rotorkreis 12 über den Umrichter 8 mit dem elektrischen Netz 2 verbunden bzw. verbindbar ist.

Der Frequenzumrichter 8 ist in einer sog. Back-to-Back-Konfiguration mit zwei dreiphasigen Teilumrichtern ausgebildet, zu denen ein maschinen- bzw. rotorseitiger Teilumrichter 13 und ein netzseitiger Teilumrichter 14 gehören, die über einen Gleichspannungszwischenkreis 17 miteinander verbunden sind. Der Gleichspannungszwischenkreis 17 ist hier eine Reihenschaltung von Kondensatoren 18, die zwischen einer positiven und einer negativen Verbindungsleitung des Gleichspannungszwischenkreises 17 angeordnet sind.

Die Teilumrichter 13, 14 sind dazu eingerichtet, die dreiphasige Wechselspannung auf einer ihrer Seite gleichzurichten und in dem Gleichspannungszwischenkreis 17 bereitzustellen und umgekehrt die Gleichspan-

nung des Gleichspannungszwischenkreises 17 wechselzurichten. Die Teilumrichter 13, 14 sind spannungsgesteuerte Stromrichter (sog. Voltage Source Converter, VSC) und können zwei- oder mehrstufige Stromrichter sein, die eine Reihe von hier nicht näher dargestellten ansteuerbaren Leistungshalbleiterschaltern, insbesondere IGBTs mit antiparallelen Freilaufdioden, Thyristoren, IGCTs, GTOs oder dgl., aufweisen, die geeignet zu Brückenschaltungen verschaltet sind und hochfrequent getaktet werden können, um die Gleich- oder Wechselrichtung zu erzielen. Es sind in der Technik unterschiedliche Stromrichterkonfigurationen allgemein bekannt, die hier verwendet werden können.

Die Netzseite 19 des netzseitigen Teilumrichters 14 ist über einen Transformator 21 und ein hier nur durch eine Drossel 22 angedeutetes Netzfilter 22 mit dem elektrischen Netz 2 verbunden bzw. verbindbar. Im Übrigen ist zwischen dem elektrischen Netz 2 und der doppelt gespeisten Asynchronmaschine 4 ein Netztransformator 23 angeordnet, der an den Verbindungspunkt zwischen dem Rotorkreis 12 und dem Statorkreis 24 angeschlossen ist, um das Spannungs- und Stromniveau des Netzes 2 auf ein geeignetes Spannungs- und Stromniveau der Asynchronmaschine 4 und umgekehrt zu wandeln.

In der in Fig. 1 dargestellten Ausführungsform sind ferner mehrere Schalter vorgesehen, zu denen ein erster Schalter 25, der in dem Rotorkreis 12 angeordnet ist, und ein zweiter Schalter 26 gehören, die es ermöglichen, den Umrichter 8 und den Motor-Generator 8 bedarfsweise von dem Netz 2, einschließlich von dem Netztransformator 23, galvanisch zu trennen. Ein Umschalter 27, der in dem Statorkreis 24 angeordnet ist, dient der Umschaltung zwischen Turbinen- (T) und Pumpbetrieb (P). Es können ferner ein Erdungsschalter 28 zur bedarfsweisen Erdung des Rotorkreises 12 bzw. des Statorkreises 24 und/oder ein Anfahr- und Bremsschalter 29 an der Motor-Generator-Einrichtung 7 vorgesehen sein.

Auf der Maschinen- bzw. Rotorseite 31 des Stromrichters 13 ist ferner eine Filteranordnung vorgesehen, zu der eine in den Rotorkreis eingeschaltete Induktivität 32 und ein Ausgangsfilter 33 mit einer Reihenschaltung aus einem Widerstand und einem Kondensator gehören, die zwischen dem Rotorkreis 12 und lokaler Masse geschaltet sind. Die Filteranordnung dient zur Dämpfung unerwünschter Schwingungen und zur Entstörung der Hochfrequenzen oder Spannungsspitzen, die durch Schalten der Halbleiterschalter in dem Umrichter 8 hervorgerufen werden.

Zur Kühlung der Leistungshalbleiterschalter bzw. -module, die durch die hochfrequente Taktung eine hohe thermische Belastung erfahren, ist vorzugsweise eine hier durch einen Block 34 angezeigte Wasserkühlung vorgesehen. Außerdem ist der Umrichter 8 vorzugsweise in einem klimatisierten Umrichterraum 36 angeordnet, in dem vorzugsweise die gesamte Leistungselektronik untergebracht ist. Zur Kühlung des Umrichterraums 36 kann vorzugsweise eine Luftkühlanlage 37 vorgesehen sein.

Wie ferner aus Fig. 1 ersichtlich, weist das Pumpspeicherkraftwerk 1 eine Sensoreinrichtung 38 zur Erfassung aktueller Betriebsgrößen und eine Steuereinrichtung 39 auf, die mit der Sensoreinrichtung 38 kommunikationsmäßig verbunden und dazu eingerichtet ist, einen Betrieb des Pumpspeicherkraftwerks 1 in Abhängigkeit von der Sensoreinrichtung 38 erfassten Betriebsgrößen zu steuern. Die Sensoreinrichtung 38 kann vielfältige Spannungs-, Stromsensoren und sonstige Wandler enthalten, die hier nur zum Teil angezeigt und aus Übersichtlichkeitsgründen nicht einzeln bezeichnet sind. Wie aus Fig. 1 ersichtlich, können bspw. die dreiphasigen Spannungen $u_s$ und Ströme $i_s$ in dem Statorkreis 24, die dreiphasigen Spannungen $u_R$ und Ströme $i_R$ auf der Rotorseite 31 des Umrichters 8 und die Gleichspannung $U_{DC}$ des Gleichspannungszwischenkreises 17 gemessen werden. Es können auch andere elektrische Größen in der Schaltung gemessen werden, aus der die vorgenannten Ströme und Spannungen abgeleitet werden können. Optional kann auch die Drehzahl n des Rotors 11 gemessen werden. Ferner wird vorzugsweise die Umgebungstemperatur T in der Umgebung des Umrichters 8 in dem Umrichterraum 36 gemessen. Diese und andere Größen werden von der Sensoreinrichtung 38 erfasst, in zugehörige elektrische Signale umgewandelt und zu der Steuereinrichtung 39 übertragen.

Die Steuereinrichtung 39 empfängt die von der Sensoreinrichtung 38 gelieferten elektrischen Signale, die die Betriebsgrößen kennzeichnen, und bestimmt anhand einer vorgegebenen Steuerlogik Steuersignale zur Steuerung der verschiedenen Komponenten des Pumpspeicherkraftwerks 1. Insbesondere steuert die Steuereinrichtung 38 die Leistungshalbleiterschalter des netzseitigen Teilumrichters 14 und des maschinenseitigen Teilumrichters 13 geeignet an, um im Pump- bzw. Turbinenbetriebsmodus einen Wirkleistungsfluss in die beiden Richtungen, von dem elektrischen Netz 2 zu dem Rotor 11 in einem Pumpbetrieb und von dem Rotor 11 zu dem Netz 2 im Turbinenbetriebsmodus zu erzielen. Die Steuereinrichtung 38 steuert ferner die Wasserkühlung 34 für den Umrichter 8 sowie die Luftkühlanlage 37, um den Umrichter 8 bzw. den Umrichterraum 36 passend zu kühlen.

Zur Speicherung der Steuerlogik, zugehöriger Parameter, der erfassten Betriebsgrößen und anderer im Betrieb erzeugter Daten weist die Steuereinrichtung 39 eine hier als Block 41 angezeigte Speichereinrichtung auf.

Es sollte erwähnt werden, dass die Fig. 1 eine vereinfachte Ausführungsform der Erfindung zeigt, in der ein einziger Umrichter 8 in dem Rotorkreis 12 angeordnet ist. Es können mehrere derartige Umrichter 8 über gesonderte oder gemeinsame Transformatoren 21 parallel zueinander zwischen dem Netz 2 und der Motor-Generator-Einrichtung 7 angeordnet sein, um den Leistungsfluss auf mehrere Zweige zu verteilen. Außerdem sind zahlreiche weitere Einrichtungen, wie bspw. eine Einrichtung zur Begrenzung der Zwischenkreisgleichspannung, und andere, die in der doppelt gespeisten Asynchronmaschine 4 normallerweise enthalten sein können, der Einfachheit und Übersichtlichkeit wegen in Fig. 1 weggelassen.

Generell funktioniert das vorstehend beschriebene Pumpspeicherkraftwerk 1 in der allgemein bekannten Weise derart, dass in Zeiten geringer Netzauslastung, wenn ein Überangebot an elektrischer Energie in dem elektrischen Netz 2 vorhanden ist, die doppelt gespeiste Asynchronmaschine 4 in einem Motorbetriebsmodus betrieben wird, um eine Pumpe der Pumpen-/Turbineneinrichtung 3 anzutreiben, um ein hier nicht näher dargestelltes Wasser in ein oberes Wasserreservoir zu pumpen. Dadurch wird die elektrische Energie des Netzes 2 in potentielle Energie des Wassers umgewandelt und gespeichert. Hierzu steuert die Steuereinrichtung 39 den Umrichter 8 geeignet an, um die von dem Netz 2 bereitgestellte Leistungsmenge möglichst optimal abzunehmen und umzuwandeln. Insbesondere steuert die Steuereinrichtung 39 den Umrichter 8 geeignet an, um pulsartig sinusförmige Spannungen und Ströme entsprechend einem aktuellen Sollwert der Rotorstromfrequenz an den Rotor 11, genauer gesagt die Rotorwicklungen, zu schalten, um eine Rotordrehzahl zu erzielen, bei der die über den Stator und den Rotor übertragene Leistung der Leistungsanforderung entspricht.

In Zeiten eines hohen Leistungsbedarfes kann die potentielle Energie des Wassers umgekehrt mittels einer Turbine der Pumpen-/Turbineneinrichtung 3 in mechanische Drehenergie der Antriebswelle 6 umgesetzt werden, so dass der Rotor 11 drehend angetrieben wird und der Generator 7 elektrische Energie generiert, die in das Netz 2 eingespeist wird. Durch Regelung der Drehzahl n des Rotors 11 sowohl im Pump- als auch im Turbinenmodus kann stets die gewünschte Leistung (entsprechend einem aktuellen Leistungssollwert) aus dem Netz 2 entnommen und gespeichert bzw. in das Netz 2 zurückgespeist werden.

Wie allgemein bekannt ist, ist die Winkelfrequenz von Rotorspannungen und Strömen in einer doppelt gespeisten Asynchronmaschine durch die Winkelfrequenz des Statorfeldes und die Rotordrehzahl bestimmt. Für die Winkelfrequenz des Rotorstroms gilt:

$$\omega_R = s\omega_S,$$

wobei $\omega_s$ die Winkelgeschwindigkeit des Statorstroms, die der synchronen Winkelgeschwindigkeit $\omega_0$ entspricht, und s der Schlupf ist, der durch die Differenz zwischen der synchronen und der mechanischen Winkelgeschwindigkeit des Rotors $\omega_m$ bestimmt ist:

$$s = \frac{\omega_s - \omega_m}{\omega}.$$

Wie aus den vorstehenden Beziehungen ersichtlich, wird die Winkelfrequenz des Rotorstroms sehr klein, wenn der Schlupf nahezu null beträgt, d.h. die Rotordrehzahl n sich der synchronen Drehzahl $n_0$ nähert.

Wie in dem oben erwähnten Dokument von Tan Yingjie et al., "Deadband Control of Doubly-Fed Induction Generator around Synchronous Speed" näher ausgeführt, hat eine niedrige Rotorstromfrequenz, wenn sich die Rotordrehzahl n der Synchrondrehzahl $n_0$ nähert, hohe Schwankungen und Maximalwerte der Temperatur zur Folge, die die Lebensdauer der in dem rotorseitigen Teilumrichter 13 verwendeten Leistungshalbleiterschalter verkürzen können. Insbesondere erreicht die Sperrschichttemperatur der Leistungshalbleiter ihr Maximum bei der synchronen Drehzahl, wenn der Schlupf niedrig ist und die Zeitdauer des Temperaturzykluses relativ lang ist. Die niedrige Rotorfrequenz bewirkt viel längere Temperaturanstiege und -abfälle, größere Spitzenschwankungen der Temperatur und insgesamt eine höhere thermische Belastung der Leistungshalbleiterschalter und anderer Komponenten in dem Rotorkreis. Insofern ist ein Betrieb in einem bestimmten Bereich um die Synchrondrehzahl $n_0$ herum, d.h. in einem Totband $[n_0-\Delta n, n_0+\Delta n]$, zu vermeiden. In bekannten Pumpspeicherkraftwerken mit doppelt gespeisten Asynchronmaschinen wird in diesem Zusammenhang die Toleranz $\Delta n$ entsprechend den thermischen Grenzen der eingesetzten Halbleitervorrichtungen im Voraus, vor der Inbetriebnahme festgelegt, um sicherzustellen, dass im Betrieb keine unzulässigen Sperrschichttemperaturen der Halbleiter hervorgerufen werden.

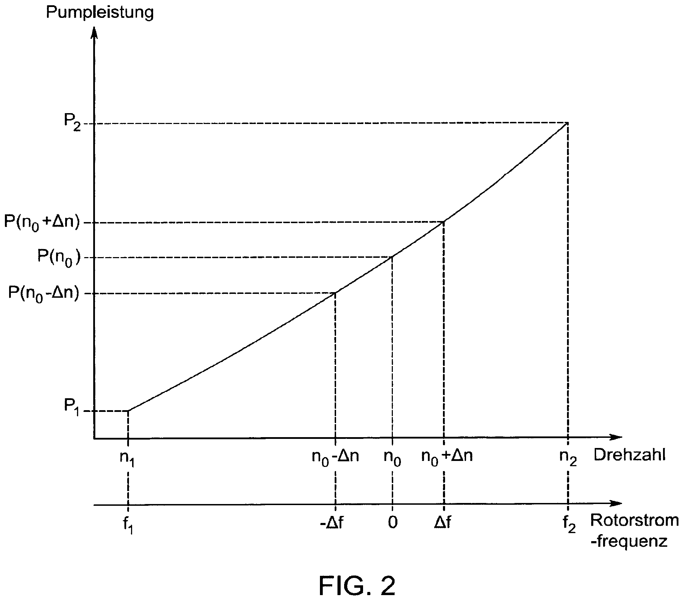

Fig. 2 zeigt eine beispielhafte Kennlinie, die die Pumpleistung P des Pumpspeicherkraftwerks 1 als Funktion der Rotordrehzahl n bzw. der Rotorstromfrequenz $f_r$ veranschaulicht. Im Allgemeinen kann die doppelt gespeiste Asynchronmaschine 4 eines Pumpspeicherkraftwerks 1 in einem begrenzten Drehzahlbereich von $n_1$ bis $n_2$ um die Synchrondrehzahl $n_0$ betrieben werden, der einem Leistungsregelbereich der Pumpleistung von $P_1$ bis $P_2$ entspricht. Die Drehzahl n kann durch Einprägen einer gewünschten Rotorstromfrequenz $f_r$ eingestellt werden. Wie vorstehend erwähnt, wird in einem Rotordrehzahlbereich $[n_0-\Delta n, n_0+\Delta n]$ um die Synchrondrehzahl $n_0$ herum die Rotorstromfrequenz in dem Bereich $[-\Delta f, \Delta f]$ so gering, dass die Rotorströme eine beträchtliche Wärmebelastung der Halbleiter des Umrichters 8 und der Rotorwicklungen hervorrufen. Dies schließt im Allgemeinen einen Betrieb innerhalb des synchronen Totbandes $[-\Delta f, \Delta f]$ der Rotorstromfrequenz aus. Damit kann aber das System in dem Pumpleistungsbereich $[P(n_0-\Delta n), P(n_0+\delta\Delta n)]$ nicht oder nicht optimal genutzt werden.

Um diesen Nachteil zu vermeiden, wird erfindungsgemäß das unzulässige synchrone Totband $[-\Delta f, \Delta f]$ der Rotorstromfrequenz bzw. $[n_0-\Delta n, n_0+\Delta n]$ der Rotordrehzahl im Betrieb in Abhängigkeit von den jeweiligen aktuellen Bedingungen des Pumpspeicherkraftwerks 1 stets aktuell, dynamisch ermittelt. Damit kann das synchrone Totband auf die jeweils vorhandenen Gegebenheiten angepasst und insbesondere entsprechend dem aktuellen Zustand des Kraftwerks 1 minimiert werden, um einen stufenlosen Betrieb auch in der Nähe der synchronen Rotorfrequenz in einem Abschnitt des Regelbereichs der Asynchronmaschine zuzulassen, der bei einem fest vorgegebenen Totband ausgeschlossen wäre.

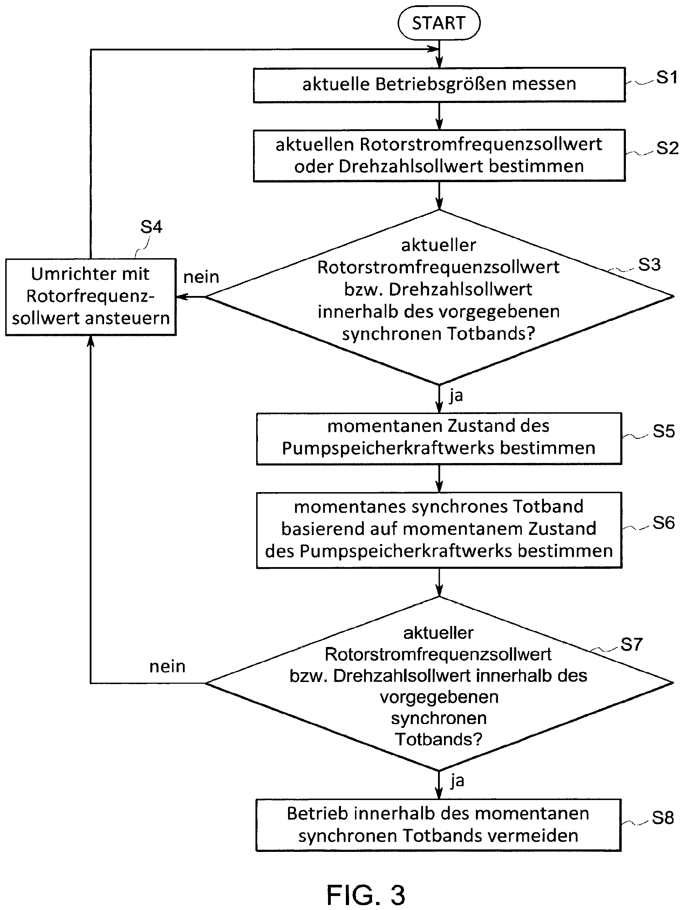

Fig. 3 veranschaulicht ein vereinfachtes Flussdiagramm eines erfindungsgemäßen Verfahrens zum Betreiben eines Pumpspeicherkraftwerks, bspw. des Pumpspeicherkraftwerks 1 nach Fig. 1, gemäß einer beispielhaften Ausführungsform der Erfindung. Im Schritt S1 werden aktuelle Betriebsgrößen, wie bspw. die Spannungen und Ströme in dem Statorkreis 24 und dem Rotorkreis 12, z.B. mit den Sensoren der Sensoreinrichtung 38, gemessen.

Im Schritt S2 werden Sollwerte für den Strom und die Spannung, die an die Rotorwicklung angelegt werden sollen, einschließlich eines aktuellen Sollwertes für die Rotorstromfrequenz, basierend auf der zwischen dem elektrischen Netz, z.B. dem Netz 2, und der doppelt gespeisten Asynchronmaschine, z.B. der Asynchronmaschine 4, zu übertragenden Sollleistung in Abhängigkeit von gemessenen aktuellen Betriebsgrößen bestimmt. Die Rotorfrequenz kann bspw. anhand bekannter Beziehungen zwischen der Rotorstromfrequenz und der Pump- bzw. Turbinenleistung, bspw. anhand einer beispielhaft in Fig. 2 dargestellten Kennlinie, bestimmt werden. Alternativ kann der Sollwert für die mechanische Drehzahl des Rotors 11 bestimmt werden, die eine zu der Rotorstromfrequenz äquivalente Größe darstellt.

In einem optionalen Schritt S3 kann der so ermittelte aktuelle Rotorfrequenzsollwert bzw. Drehzahlsollwert gegebenenfalls mit einem vorgegebenen unzulässigen synchronen Totband verglichen werden, wenn ein derartiger im Voraus vorgegeben worden ist. Wenn der aktuelle Rotorfrequenzsollwert nicht in das synchrone Totband fällt, wird mit Schritt S4 fortgefahren. Andernfalls fährt das Verfahren mit Schritt S5 fort.

Im Schritt S4 wird der Umrichter, z.B. der Umrichter 8, moduliert, bspw. durch Pulsweitenmodulation, angesteuert, um pulsartig sinusförmige Spannungen und Ströme mit dem aktuellen Sollwert der Rotorstromfrequenz an den Rotor zu schalten. Anschließend kehrt das Verfahren zum Schritt S1 zurück.

Wenn der aktuelle Rotorfrequenzsollwert bzw. Drehzahlsollwert in das im Voraus vorgegebene synchrone Totband fällt (ja im Schritt S3) oder wenn der Schritt S3 nicht durchgeführt wird, wird im Schritt S5 der momentane Zustand des Pumpspeicherkraftwerks, z.B. des Kraftwerks 1, bestimmt. Der momentane Zustand des Pumpspeicherkraftwerks wird anhand einer oder mehrerer kennzeichnender Größen bestimmt, zu denen einschließlich, jedoch nicht darauf beschränkt, Spannungen auf der Maschinenseite des Umrichters, Ströme auf der Maschinenseite des Umrichters, die Rotorstromfrequenz, der Leistungsfaktor auf der Maschinenseite des Umrichters, die Spannung an einem Gleichspannungszwischenkreis, z.B. dem Zwischenkreis 17 des Umrichters, das zur Ansteuerung des Umrichters verwendete Pulsmuster, die zur Ansteuerung des Umrichters verwendete Taktfrequenz, eine Umgebungstemperatur des Umrichters, wie sie mit dem Temperatursensor T gemessen wird, eine Kühlwassertemperatur und/oder ein Kühlwasserdurchfluss der Wasserkühlung, bspw. der Wasserkühlung 34, des Umrichters und andere gehören können. Es können ferner feste, unveränderbare Einflussgrößen bzw. Parameter berücksichtigt werden, zu denen die Bauart der eingesetzten Halbleiterschalter bzw. -module in dem Umrichter, die Nennauslegung des Umrichters, die eingesetzten Leistungshalbleiterbeschaltungen (z.B. hier nicht näher dargestellte Snubber-Glieder) und/oder die bekannten Wärmewiderstände und Wärmekapazitäten innerhalb der Komponenten gehören.

Die Beziehungen zwischen diesen Größen, die den momentanen Zustand des Pumpspeicherkraftwerks kennzeichnen, und dem unzulässigen synchronen Totband können als Funktionen, Kennlinien, Nachschlagetabellen, implementierte Algorithmen oder in anderer geeigneter Weise im Voraus definiert, empirisch bestimmt, abgespeichert und dann im Betrieb online verwendet werden. Die Bestimmung des Zustands des Pumpspeicherkraftwerks, einschließlich der diesen kennzeichnenden Größen, kann kontinuierlich, bspw. in jedem Iterationsschritt des in Fig. 3 dargestellten Verfahrens oder auch nur periodisch in definierten Intervallen erfolgen.

Im Schritt S6 wird anschließend das momentan unzulässige synchrone Totband basierend auf dem aktuellen Zustand des Pumpspeicherkraftwerks in Abhängigkeit von der einen oder den mehreren den momentanen Zustand des Pumpspeicherkraftwerks kennzeichnenden Größen bestimmt. Es werden Kombinationen von kennzeichnenden Größen berücksichtigt, die das minimale unzulässige synchrone Totband ergeben.

Im Schritt S7 wird anschließend überprüft, ob der aktuelle Rotorstromfrequenzsollwert bzw. Drehzahlsollwert in das momentane synchrone Totband fällt. Falls dies nicht der Fall ist (nein im Schritt S7), fährt das Verfahren anschließend mit Schritt S4 fort, in dem der Umrichter in normaler Weise angesteuert wird, um den gewünschten Rotorstrom und die gewünschte Rotorspannung mit dem aktuellen Sollwert der Rotorstromfrequenz zu generieren und an die Rotorwicklung anzulegen.

Falls der aktuelle Rotorstromfrequenzsollwert bzw. Drehzahlsollwert innerhalb des momentanen synchronen Totbands liegt (ja im Schritt S7), werden anschließend im Schritt S8 Maßnahmen ergriffen, um einen Betrieb des Pumpspeicherkraftwerks innerhalb dieses Totbandes zu vermeiden.

Welche Maßnahmen im Schritt S8 ergriffen werden, hängt von den individuellen Wünschen und Anforderungen der Pumpspeicherkraftwerksbetreiber ab. Im einfachsten Fall könnte ein Betrieb des Pumpspeicherkraftwerks 1 vorübergehend eingestellt werden, bis sich wieder Betriebspunkte außerhalb des unzulässigen synchronen Totbands ergeben. Bevorzugterweise werden jedoch Abhilfemaßnahmen eingeleitet, um einen Betrieb des Pumpspeicherkraftwerks, wenngleich gegebenenfalls in einem suboptimalen Betriebspunkt, fortzusetzen.

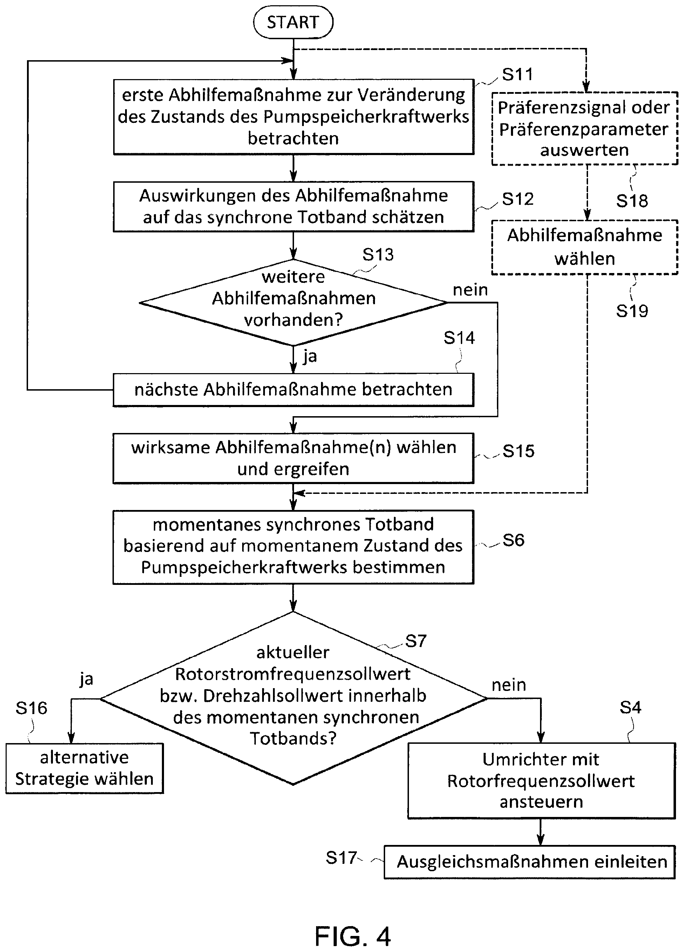

Fig. 4 zeigt eine vorteilhafte Weiterbildung des erfindungsgemäßen Verfahrens nach Fig. 3, die die Einleitung geeigneter Abhilfemaßnahmen zur Fortführung des Betriebs des Pumpspeicherkraftwerks bei weiter reduziertem momentanem unzulässigem synchronem Totband ermöglicht. Im Schritt S11 wird eine erste Abhilfemaßnahme, bspw. eine erste Abhilfemaßnahme von mehreren vorab gespeicherten Abhilfemaßnahmen, die den Zustand des Pumpspeicherkraftwerks zu verändern vermögen, betrachtet. Zu diesen Maßnahmen kann bspw. eine Verringerung der Taktfrequenz zur Ansteuerung des Umrichters gehören. Eine verringerte Taktfrequenz für die Halbleiterschalter des Umrichters hat geringere Temperaturhübe und somit eine geringere maximale Temperatur der Halbleiterschalter zur Folge. Alternativ oder zusätzlich kann auch eine Änderung des Pulsmusters zur Ansteuerung des Umrichters betrachtet werden. Wie allgemein bekannt ist, können verschiedene Modulationsverfahren, einschließlich verschiedener Pulsweitenmodulationsverfahren, in unterschiedlichen Betriebsmodi von Umrichtern und bei verschiedenen Taktfrequenzen unterschiedliche Leistungsverluste der Halbleiterelemente des Umrichters und unterschiedliche damit verbundene Temperaturbelastungen zur Folge haben. Ferner kann eine Verringerung der Zwischenkreisgleichspannung des Umrichters berücksichtigt werden, die ebenfalls zur Reduzierung der thermischen Belastung der Halbleiterelemente führen kann. Noch weiter kann erwogen werden, die geregelte Blindleistung zu reduzieren, wodurch der Strom und somit die Last und Temperatur der Halbleiterelemente und anderer Komponenten des Systems verringert werden. Außerdem kann der thermischen Belastung durch eine weitere Verringerung einer Kühlwassertemperatur und/oder eine Vergrößerung des Kühlwasserdurchflusses bei der Wasserkühlung des Umrichters begegnet werden. Darüber hinaus ist es möglich, durch Erhöhung der Leistung einer Luftkühlanlage die Umgebungstemperatur in einem Umrichterraum, bspw. dem Umrichterraum 36, zu reduzieren. Durch jede dieser Maßnahmen kann die thermische Belastung der Komponenten des Systems verringert und dadurch der Zustand des Systems derart verändert bzw. verbessert werden, dass das synchrone Totband weiter reduziert werden kann.

Im Schritt S12 werden jeweils die Auswirkungen der gerade betrachteten Abhilfemaßnahme auf das synchrone Totband anhand gespeicherter Beziehungen geschätzt. Diese Beziehungen sind entweder allgemein bekannt, z.B. Datenblättern von Halbleiterelementen bzw. -modulen entnehmbar, oder sie können im Voraus, vor der Inbetriebnahme eines Pumpspeicherkraftwerks empirisch ermittelt und in einem Speicher, bspw. der Speichereinrichtung 41, gespeichert werden, um im Betrieb im Schritt S12 herangezogen zu werden. Diese Beziehungen oder Korrelationen können als Funktionen, Kennlinien, Nachschlagetabellen oder implementierte Algorithmen oder in beliebiger sonstiger geeigneter Weise hinterlegt werden.

Im Schritt S13 wird überprüft, ob weitere Abhilfemaßnahmen, einschließlich vorab gespeicherter Beziehungen zwischen diesen und den Auswirkungen auf das synchrone Totband, zur Verfügung stehen, die berücksichtigt werden könnten. Falls dies der Fall ist (ja im Schritt S13), wird im Schritt S14 die nächste Abhilfemaßnahme betrachtet und dann zum Schritt S12 zurückgekehrt, um deren Auswirkung auf das synchrone Totband zu schätzen.

Falls keine weitere Abhilfemaßnahme mehr zu berücksichtigen ist (nein im Schritt S13), wird anschließend im Schritt S15 wenigstens eine wirksame Abhilfemaßnahmen gewählt, um das synchrone Totband zu minimieren oder zumindest zu reduzieren. Es können Kombinationen mehrerer Maßnahmen gewählt und initiiert werden.

Im nachfolgenden Schritt S6 wird entsprechend dem Schritt S6 nach Fig. 3 das momentan unzulässige synchrone Totband basierend auf den den aktuellen Zustand des Pumpspeicherkraftwerks kennzeichnenden Größen bestimmt.

Im Schritt S7 wird analog der aktuelle Rotorstromfrequenzsollwert bzw. Drehzahlsollwert dahingehend überprüft, ob er innerhalb des momentanen synchronen Totbandes liegt. Falls dies der Fall ist und sofern keine weiteren Abhilfemaßnahmen mehr zur Verfügung stehen, die noch ergriffen werden könnten, können im Schritt S16 alternative Strategien implementiert und durchgeführt werden, zu denen bspw. ein Betrieb in einem anderen, suboptimalen Betriebspunkt mit vermindertem Leistungsaustausch oder ein Durchfahren des synchronen Totbandes, wenn ein Betrieb innerhalb dessen auf einen kurzen, noch akzeptablen Zeitraum beschränkt werden kann, gehören können. Der Betrieb des Pumpspeicherkraftwerks kann auch vorübergehend unterbrochen werden, indem die Asynchronmaschine 4 und die Pumpen-/ Turbineneinrichtung 3 temporär abgeschaltet werden.

Falls der aktuelle Rotorstromfrequenzsollwert bzw. Drehzahlsollwert nicht innerhalb des momentanen synchronen Totbandes liegt (nein im Schritt S7 nach Fig. 4), wird im Schritt S4 der Umrichter entsprechend angesteuert, um die Spannungen und Ströme mit dem Sollwert der Rotorstromfrequenz für den Rotor zu liefern.

In einem vorteilhaften, wenngleich optionalen Schritt S17 können zusätzlich Ausgleichsmaßnahmen durchgeführt werden, um gewisse Nachteile bzw. Beeinträchtigungen, die mit der Durchführung der Abhilfemaßnahmen verbunden sind, zu mildern. Wenn bspw. ein erhöhter Anteil an Harmonischen in den Rotorspannungen bzw. - strömen oder erhöhte Stromrippel festgestellt werden, kann/können die Taktfrequenz und/oder das Pulsmuster zur Ansteuerung des Umrichters verändert werden, um die Harmonischen und/oder Stromrippel zu reduzieren. Alternativ oder zusätzlich kann in dem Fall, dass die in dem maschinenseitigen Teilumrichter geregelte Blindleistung reduziert wird, um die Wärmebelastung zu reduzieren, der kleinere verfügbare Blindleistungsbereich durch Verwendung des netzseitigen Teilumrichters kompensiert werden. Es können noch andere Ausgleichsmaßnahmen im Schritt S17 vorgesehen sein.

Fig. 4 zeigt ferner eine weitere vorteilhafte Modifikation des erfindungsgemäßen Verfahrens. Wie anhand der Blöcke S18 und S19 entnehmbar, kann die einzuleitende wirksame Abhilfemaßnahme zur Vermeidung eines Betriebs innerhalb des unzulässigen synchronen Totbandes in Abhängigkeit von einem Präferenzsignal oder -parameter gewählt werden. Bspw. kann ein Präferenzsignal von außen, bspw. von einer zentralen Kontrollstelle, dem Kraftwerk 1 zugeführt und im Bedarfsfalle, bspw. von der Steuereinrichtung 39, im Schritt S18 ausgewertet werden. Es kann auch ein Präferenzparameter, der die bevorzugte Abhilfemaßnahme kennzeichnet, im Voraus, bspw. bei der Inbetriebnahme oder einer Instandhaltungsmaßnahme, festgelegt und z.B. in der Speichereinrichtung 41 zur späteren Verwendung abgespeichert werden. Nachdem im Schritt S19 die Entscheidung über die einzuleitende Abhilfemaßnahme abhängig von dem Präferenzsignal oder -parameter getroffen worden ist, fährt das Verfahren anschließend mit Schritt S6 fort. Die Schritte S18 und S19 können somit alternativ zu den Schritten S11-S15 durchgeführt werden.

Die Schritte S18 und S19 könnten auch in Kombination mit den Schritten S11-S15 durchgeführt werden, wenn das externe Präferenzsignal oder der interne Präferenzparameter mehrere bevorzugte Abhilfemaßnahmen kennzeichnet, die dann entsprechend den Schritten S11-S15 im Bedarfsfalle hinsichtlich der Wirksamkeit bei der Reduzierung des unzulässigen Totbands unter den momentanen Betriebsbedingungen ausgewertet werden.

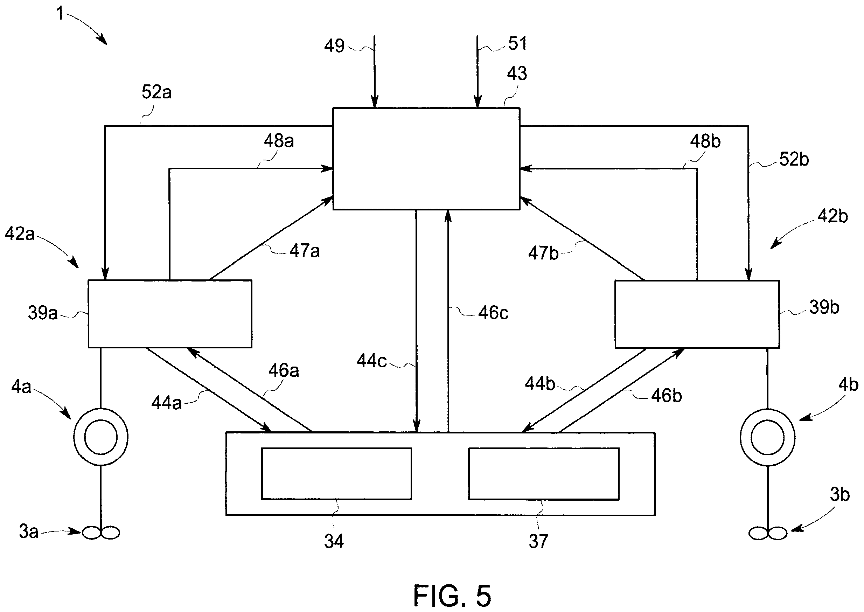

Fig. 5 zeigt ein Blockdiagramm einer weiteren Ausführungsform der Erfindung, die einen Betrieb mit minimiertem momentanem synchronem Totband unter maximaler Ausnutzung des Leistungsangebotes des elektrischen Netzes 2 ermöglicht. Fig. 5 zeigt nur eine stark vereinfachte Prinzipdarstellung mit den relevanten Funktionsblöcken und Signalpfaden, die die Funktionsweise dieser Ausführungsform veranschaulichen.

Der Unterschied der Ausführungsform nach Fig. 5 gegenüber den vorstehend erläuterten Ausführungsformen liegt darin, dass diese mehrere Pumpen-/Turbineneinheiten zur Optimierung des Betriebs und synchronen Totbandes verwendet. Wenngleich hier lediglich zwei Pumpen-/Turbineneinheiten dargestellt sind, lässt sich das Prinzip auf eine beliebige Anzahl von Pumpen-/ Turbineneinheiten anwenden.

Bezug nehmend auf Fig. 5 weist das Pumpspeicherkraftwerk 1 hier eine erste doppelt gespeiste Asynchronmaschine 4a auf, die über einen hier nicht näher dargestellten ersten Umrichter 8 mit dem elektrischen Netz 2 verbunden und ferner mit einer ersten Pumpen-/Turbineneinrichtung 3a antriebsmäßig gekoppelt ist. Der Einfachheit halber soll die Kombination dieser Komponenten 3a, 4a, 8 hier als eine erste Pumpeinheit 42a bezeichnet werden, obwohl diese auch für den Turbinenbetrieb genutzt werden kann. Zur Steuerung des Betriebs der ersten Pumpeinheit 42a ist dieser eine erste Steuereinheit 39a der Steuereinrichtung 39 zugeordnet.

Ferner ist eine zweite Steuereinheit 39b 39 vorgesehen, die den Betrieb einer zweiten Pumpeinheit 42b steuert, zu der eine zweite doppelt gespeiste Asynchronmaschine 4b mit einem hier nicht näher dargestellten Umrichter 8 und eine zweite Pumpen-/Turbineneinrichtung 3b gehören.

Eine Optimierungseinrichtung 43 steht mit der ersten und der zweiten Steuereinheit 39a, 39b in Kommunikationsverbindung und tauscht Daten mit diesen aus, um einen Betrieb der beiden Pumpeinheiten 42a, 42b derart einzustellen, dass ein möglichst stufenloser, problemloser Betrieb des Pumpspeicherkraftwerks 1 in dem gesamten regelbaren Leistungsbereich bei minimiertem synchronen Totband ermöglicht wird. Wenngleich Fig. 5 eine den Steuereinheiten 39a, 39b übergeordnete Optimierungseinrichtung 43 veranschaulicht, könnten die Steuereinheiten 39a, 39b auch direkt miteinander kommunizieren und den Betrieb des Pumpspeicherkraftwerks 1 gemeinsam steuern.

In Fig. 5 sind ferner eine Wasserkühleinrichtung 34 und eine Luftkühlanlage 37 als beispielhafte Hilfseinrichtungen dargestellt, die zur Veränderung des Zustands des Pumpspeicherkraftwerks 1 beeinflusst werden können, um das synchrone Totband zu optimieren. Hierzu liefern die Steuereinheiten 39a, 39b entsprechende Steuer- bzw. Stellbefehle 44a, 44b an die Einrichtungen 34, 37, um bspw. den Durchfluss und/oder die Temperatur des Kühlwassers der Wasserkühleinrichtung 34 oder die Kühlleistung der Luftkühlanlage 37 anzupassen. Die Optimierungseinrichtung 43 könnte auch entsprechende Steuer- bzw. Stellbefehle 44c direkt an die Einrichtungen 34, 37 senden.

Die Wasserkühleinrichtung 34 und die Luftkühlanlage 37 melden wiederum über hier nicht näher dargestellte Sensoren erfasste momentane Werte von Zustandsvariablen, die den Zustand der Einrichtungen 34, 37 kennzeichnen, über Signale 46a, 46b bzw. 46c an die erste Steuereinheit 39a, die zweite Steuereinheit 39b und gegebenenfalls die Optimierungseinrichtung 43.

Die Steuereinheiten 39a, 39b enthalten jeweils eine Logik, um unter Berücksichtigung der erhaltenen Zustandssignale 46a, 46b sowie weiterer aktuell gemessener Betriebsgrößen, wie vorstehend im Zusammenhang mit den Figuren 1-3 näher erläutert, den aktuellen Zustand der jeweiligen Pumpeinheit 42a, 42b zu schätzen und basierend darauf ein momentanes zustandsabhängiges synchrones Totband zu bestimmen. Dieses momentane synchrone Totband wird von den Steuereinheiten 39a, 39b jeweils über entsprechende Meldesignale 47a, 47b an die Optimierungseinrichtung 43 gemeldet. Zusätzlich bestimmen die Steuereinheiten 39a, 39b ferner ihren regelbaren Blindleistungsbereich und melden diesen über entsprechende Meldesignale 48a bzw. 48b an die Optimierungseinrichtung 43.

Die Optimierungseinrichtung 43 erhält ferner ein weiteres Eingangssignal, das die Sollwirkleistung und die Sollblindleistung zur Abnahme von dem elektrischen Netz und zur Übertragung und Speicherung über die Pumpeinheiten 42a, 42b im Pumpbetriebsmodus bzw. zur Generierung durch die Einheiten 42a, 42b und zur Einspeisung in das elektrische Netz 2, wenn die Einheiten 42a, 42b im Turbinenmodus arbeiten, kennzeichnet. Diese Wirkleistungs- und der Blindleistungssollwerte können bspw. ausgehend von der vom elektrischen Netz 2 momentan bereitgestellten Energie durch eine hier nicht näher dargestellte übergeordnete Steuer- und Kontrollinstanz bestimmt und an die Optimierungseinrichtung 43 oder direkt an die Steuereinheiten 39a, 39b gemeldet werden. Alternativ kann die Optimierungseinrichtung 43 oder können die Steuereinheiten 39a, 39b diese Sollwerte auch selbst anhand momentan gemessener Betriebsgrößen bestimmen.

Es kann ein weiteres bspw. externes Parametersignal 51 als Eingangssignal für die Optimierungseinrichtung 43 vorgesehen sein, das die Präferenz dafür anzeigt, welche Abhilfemaßnahme die Optimierungseinrichtung 43 ergreifen soll, um einen Betrieb im unzulässigen synchronen Totband der Rotorstromfrequenz bzw. der Rotordrehzahl zu vermeiden und das Totband vorteilhafterweise zu reduzieren. Anstelle eines bspw. von einer entfernten Leitstelle zugeführten externen Parametersignals kann auch ein vorabgespeicherter Präferenzparameter 51, im einfachsten Fall ein Präferenzflag, herangezogen werden.

Die Optimierungseinrichtung 43 liefert Ausgangssignale 52a, 52b an die erste bzw. zweite Pumpeinheit 42a, 42b, wobei jedes Ausgangssignal 52a, 52b die speziellen Sollwerte für die Wirkleistung und die Blindleistung angeben, die durch die jeweilige Einheit 42a, 42b geregelt werden sollen. Diese den Einheiten 42a, 42b zugewiesenen Wirk- und Blindleistungsanteile bestimmt die Optimierungseinrichtung 43 basierend auf den gesamten Wirk- und Blindleistungssollwerten bzw. -anforderungen, die sie über das Eingangssignal 49 erhält, unter Berücksichtigung der durch die Einheiten 42a, 42b gemeldeten möglichen Blindleistungsregelbereiche (Meldesignale 48a, 48b) und der zustandsabhängigen momentanen synchronen Totbänder jeder Pumpeinheit 42a, 42b (Meldesignale 47a, 47b). Vorteilhafterweise kann die Optimierungseinrichtung 49 in Abhängigkeit von einem jeweiligen Präferenzsignal bzw. -parameter 51 die Sollwerte für die Wirk- und Blindleistung beliebig auf die wenigstens zwei Pumpeinheiten 42a, 42b aufteilen, so dass diese Sollwerte durch die Einheiten tatsächlich geregelt werden können, während ein Betrieb jeder Einheit innerhalb deren momentanen synchronen Totbandes vermieden wird. Insbesondere ist es möglich, den regelbaren Blindleistungsbereich, der von einer der Pumpeinheiten 42a, 42b verringert werden kann, um das synchrone Totband zu minimieren, durch die andere der Pumpeinheiten 42a, 42b zu kompensieren, um den geforderten Blindleistungssollwert zu erreichen. Im Übrigen sorgen die Pumpeinheiten 42a, 42b in Abhängigkeit von den ihnen jeweils vorgegebenen Wirk- und Blindleistungssollwerten entsprechend den Signalen 52a bzw. 52b selbst für eine Optimierung ihres jeweiligen momentanen Totbandes in der vorstehend im Zusammenhang mit den Figuren 1-4 beschriebenen Weise, einschließlich für die Durchführung geeigneter Abhilfe- und gegebenenfalls Ausgleichsmaßnahmen.

Alternativ kann die Optimierungseinrichtung in Abhängigkeit von einem entsprechenden Präferenzsignal bzw. -parameter 51 eine der Pumpeinheiten 42a bzw. 42b anweisen, unter Anwendung einer wirksamen Abhilfemaßnahme mit reduziertem synchronen Totband zu arbeiten, während die andere Pumpeinheit 42b bzw. 42a angewiesen wird, in einem normalen Betriebsmodus zu arbeiten.

Es ist ein Verfahren zum Betreiben eines Pumpspeicherkraftwerks 1, das eine doppelt gespeiste Asynchronmaschine 4 mit einem Frequenzumrichter 8 in einem Rotorkreis 12 verwendet, offenbart. Das Verfahren enthält, dass ein aktueller Sollwert für die Rotorstromfrequenz basierend auf einer zwischen einem elektrischen Netz 2 und der doppelt gespeisten Asynchronmaschine 4 zu übertragenden Sollleistung in Abhängigkeit von gemessenen aktuellen Betriebsgrößen bestimmt wird. Das Verfahren enthält ferner, dass ein momentanes unzulässiges synchrones Totband $[-\Delta f, \Delta f]$; $[n_0-\Delta n, n_0+\Delta n]$ in Abhängigkeit von einer oder mehreren einen momentanen Zustand des Pumpspeicherkraftwerks 4 kennzeichnenden Größen bestimmt und minimiert wird. Das synchrone Totband $[-\Delta f, \Delta f]$; $[n_0-\Delta n, n_0+\Delta n]$ ist durch eine für den stationären Betrieb zulässige minimal erforderliche Rotorstromfrequenz $\Delta f$ bzw. Drehzahldifferenz $\Delta n$ der Rotordrehzahl von der Synchrondrehzahl $n_0$ bestimmt, die erforderlich ist, um Beeinträchtigungen und Beschädigungen an Komponenten des Systems aufgrund einer thermischen Belastung zu vermeiden. Das Verfahren enthält ferner ein Ansteuern des Umrichters, um Spannungen und Ströme mit dem aktuellen Sollwert der Rotorstromfrequenz für den Rotor (11) der Asynchronmaschine (4) zu generieren, wenn der aktuelle Sollwert der Rotorstromfrequenz bzw. Drehzahl nicht stationär in das momentane unzulässige synchrone Totband $[-\Delta f, \Delta f]$; $[n_0-\Delta n, n_0+\Delta n]$ fällt. Ein System zum Betreiben eines Pumpspeicherkraftwerks 1 mit einer doppelt gespeisten Asynchronmaschine 4 ist ebenfalls offenbart.

**Patentansprüche**

1.  Verfahren zum Betreiben eines Pumpspeicherkraftwerks mit einer doppelt gespeisten Asynchronmaschine (4), die einen Stator (9), der mit einem elektrischen Netz (2) direkt verbunden ist, und einen Rotor (11) aufweist, der über einen Umrichter (8) mit dem elektrischen Netz (2) verbunden ist, wobei das Verfahren aufweist:

Bestimmen eines aktuellen Sollwertes für eine Rotorstromfrequenz oder eine mechanische Drehzahl (n) des Rotors (11) basierend auf einer zwischen dem elektrischen Netz (2) und der doppelt gespeisten Asynchronmaschine (4) zu übertragenden Sollleistung in Abhängigkeit von gemessenen aktuellen Betriebsgrößen;

Bestimmen einer oder mehrerer einen momentanen Zustand des Pumpspeicherkraftwerks (1) kennzeichnenden Größen;

Bestimmen eines momentanen unzulässigen synchronen Totbands ($[-\Delta f, \Delta f]$; $[n_0-\Delta n, n_0+\Delta n]$), das durch eine minimal für den stationären Betrieb erforderliche Rotorstromfrequenz ($\Delta f$) bzw. Drehzahldifferenz ($\Delta n$) der Rotordrehzahl von der Synchrondrehzahl ($n_0$) bestimmt ist, in Abhängigkeit von der einen oder den mehreren den momentanen Zustand des Pumpspeicherkraftwerks (1) kennzeichnenden Größen in einer derartigen Weise, dass das momentane unzulässige synchrone Totband ($[-\Delta f, \Delta f]$; $[n_0-\Delta n, n_0+\Delta n]$) entsprechend dem aktuellen Zustand des Pumpspeicherkraftwerks (1) minimiert wird; und

Ansteuern des Umrichters (8), um pulsartig sinusförmige Spannungen und Ströme mit dem aktuellen Sollwert der Rotorstromfrequenz an den Rotor (11) zu schalten, wenn der aktuelle Sollwert der Rotorstromfrequenz bzw. mechanischen Rotordrehzahl nicht stationär in das momentane minimierte unzulässige synchrone Totband ($[-\Delta f, \Delta f]$; $[n_0-\Delta n, n_0+\Delta n]$) fällt.

2. Verfahren nach Anspruch 1, wobei der Sollwert der Rotorfrequenz bzw. der mechanischen Drehzahl und/oder die für den stationären Betrieb zulässige minimal erforderliche Rotorfrequenz bzw. mechanische Drehzahl in Abhängigkeit von einer oder mehreren der folgenden gemessenen aktuellen Betriebsgrößen bestimmt wird: Ströme ($i_s$) in einem Statorkreis (24), Spannungen ($u_s$) in dem Statorkreis (24), Ströme ($i_R$) auf der Netzseite in einem Rotorkreis (12) und Rotordrehzahl (n).

3. Verfahren nach Anspruch 1 oder 2, wobei die eine oder mehreren einen momentanen Zustand des Pumpspeicherkraftwerks (1) kennzeichnenden Größen kontinuierlich oder periodisch erfasst oder bestimmt werden.

4. Verfahren nach einem beliebigen der vorhergehenden Ansprüche, wobei zu der einen oder den mehreren einen momentanen Zustand des Pumpspeicherkraftwerks (1) kennzeichnenden Größen eine oder mehrere der folgenden Größen gehören: Spannungen auf der Maschinenseite des Umrichters (8), Ströme auf der Maschinenseite des Umrichters (8), Rotorstromfrequenz, Leistungsfaktor auf der Maschinenseite des Umrichters (8), Spannung ($U_{DC}$) an einem Gleichspannungszwischenkreis (17) des Umrichters (8), Pulsmuster zur Ansteuerung des Umrichters (8), Taktfrequenz zur Ansteuerung des Umrichters (8), Umgebungstemperatur des Umrichters (8), Kühlwassertemperatur und/ oder- durchfluss bei Wasserkühlung des Umrichters (8).

5. Verfahren nach Anspruch 4, wobei der aktuelle Zustand des Pumpspeicherkraftwerks (1) ferner unter Berücksichtigung fester Einflussgrößen bestimmt wird, zu denen eine oder mehrere der folgenden gehören: Bauart der eingesetzten Halbleiterschalter in dem Umrichter (8), Bemessung des Umrichters (8), eingesetzte Halbleiterbeschaltungen und Wärmewiderstände und Wärmekapazitäten innerhalb der Komponenten.

6. Verfahren nach Anspruch 4 oder 5, wobei Beziehungen zwischen den einen momentanen Zustand des Pumpspeicherkraftwerks (1) kennzeichnenden Größen und dem unzulässigen synchronen Totband als Funktionen, Nachschlagetabellen oder implementierte Algorithmen im Voraus abgespeichert und im Betrieb verwendet werden.

7. Verfahren nach einem beliebigen der vorhergehenden Ansprüche, wobei ein festes synchrones Totband im Voraus vorgegeben wird und ein momentanes synchrones Totband nur in dem Fall bestimmt wird, dass der aktuelle Sollwert der Rotorstromfrequenz bzw. der mechanischen Drehzahl in das vorgegebene synchrone Totband fällt.

8. Verfahren nach einem beliebigen der vorhergehenden Ansprüche, wobei in dem Fall, dass der aktuelle Sollwert der Rotorstromfrequenz bzw. der mechanischen Drehzahl in das unzulässige synchrone Totband ($[-\Delta f, \Delta f]$; $[n_0-\Delta n, n_0+\Delta n]$) fällt, eine Abhilfemaßnahme zur Vermeidung eines Betriebs innerhalb des Totbandes eingeleitet wird und/oder dieser Fall an eine übergeordnete Steuerung gemeldet wird,

wobei die Abhilfemaßnahme eine Reduzierung des synchronen Totbandes ($[-\Delta f, \Delta f]$; $[n_0-\Delta n, n_0+\Delta n]$) durch Veränderung des Zustands des Pumpspeicherkraftwerks (1) anhand einer oder mehrerer der folgenden Maßnahmen aufweist:

Verringerung einer Taktfrequenz zur Ansteuerung des Umrichters (8),
Wechseln des Pulsmusters zur Ansteuerung des Umrichters (8),
Verringerung einer Spannung ($U_{DC}$) an einem Gleichspannungszwischenkreis (17) des Umrichters (8),
Reduzierung der geregelten Blindleistung des Umrichters (8),
Veränderung einer Kühlwassertemperatur, eines Kühlwasserdurchflusses oder von beiden bei Wasserkühlung des Umrichters (8), und
Verringerung der Umgebungstemperatur in einem Umrichterraum (36) unter Verwendung einer Luftkühlanlage (37).

9. Verfahren nach Anspruch 8, wobei die einzuleitende Abhilfemaßnahme zur Vermeidung eines Betriebs innerhalb des Totbandes in Abhängigkeit von einem Präferenzsignal oder -parameter (51) ausgewählt wird.

10. Verfahren nach Anspruch 8 oder 9, wobei die einzuleitende Abhilfemaßnahme zur Vermeidung eines Betriebs innerhalb des Totbandes durch Vergleich verschiedener möglicher Abhilfemaßnahmen unter Berücksichtigung deren Auswirkungen auf das unzulässige synchrone Totband ($[-\Delta f, \Delta f]$; $[n_0-\Delta n, n_0+\Delta n]$) ermittelt wird.

11. Verfahren nach einem beliebigen der Ansprüche 8-10, das ferner Ausgleichsmaßnahmen aufweist, um mit der oder den Abhilfemaßnahmen verbundene Beeinträchtigungen zu mildern, wobei zu den Ausgleichsmaßnahmen eine oder mehrere der folgenden Maßnahmen gehören:

Veränderung der Taktfrequenz, des Pulsmusters zur Ansteuerung des Umrichters (8) oder von beiden zur Reduktion von Harmonischen und/oder von Stromrippeln,
Kompensation eines kleineren verfügbaren Blindleistungsbereiches durch Verwendung eines netzseitigen Teilumrichters (14) des Umrichters (8), und
Kompensation eines kleineren verfügbaren Blindleistungsbereiches, einer reduzierten Wirkleistung oder von beiden in einer doppelt gespeisten Asynchronmaschine (4a) unter Verwendung wenigstens einer weiteren doppelt gespeisten Asynchronmaschine (4b).

12. System zum Betreiben eines Pumpspeicherkraftwerks (1) mit einer doppelt gespeisten Asynchronmaschine (4), die einen Stator (9), der mit einem elektrischen Netz (2) direkt verbunden ist, und einen Rotor (11) aufweist, der über einen Umrichter (8) mit dem elektrischen Netz (2) verbunden ist, und mit einer Pumpen-/Turbineneinrichtung (3), die mit der doppelt gespeisten Asynchronmaschine (4) antriebsmäßig verbunden ist, wobei das System aufweist:

eine Sensoreinrichtung (38) zur Messung aktueller Betriebsgrößen, einschließlich Ströme ($i_s$, $i_R$) und Spannungen ($u_s$) in einem Statorkreis (24) und einem Rotorkreis (12); und
eine Steuereinrichtung (38) zur Steuerung des Betriebs des Pumpspeicherkraftwerks (1), die mit der Sensoreinrichtung (38) kommunikationsmäßig verbunden und eingerichtet ist, um

einen aktuellen Sollwert für eine Rotorstromfrequenz oder eine mechanische Drehzahl des Rotors basierend auf einer zwischen dem elektrischen Netz (2) und der doppelt gespeisten Asynchronmaschine (4) zu übertragenden Sollleistung in Abhängigkeit von den gemessenen aktuellen Betriebsgrößen zu bestimmen,
eine oder mehrere einen momentanen Zustand des Pumpspeicherkraftwerks (1) kennzeichnende Größen zu bestimmen,
ein momentanes unzulässiges synchrones Totband ($[-\Delta f, \Delta f]$; $[n_0-\Delta n, n_0+\Delta n]$), das durch eine für den stationären Betrieb zulässige minimal erforderliche Rotorstromfrequenz ($\Delta f$) bzw. Drehzahldifferenz ($\Delta n$) der Rotordrehzahl von der Synchrondrehzahl ($n_0$) bestimmt ist, in Abhängigkeit von der einen oder den mehreren den momentanen Zustand des Pumpspeicherkraftwerks (1) kennzeichnenden Größen in einer derartigen Weise zu bestimmen, dass das momentane unzulässige synchrone Totband ($[-\Delta f, \Delta f]$; $[n_0-\Delta n, n_0+\Delta n]$) entsprechend dem aktuellen Zustand des Pumpspeicherkraftwerks (1) minimiert wird, und den Umrichter (8) anzusteuern, um pulsartig sinusförmige Spannungen und Ströme mit dem aktuellen Sollwert der Rotorstromfrequenz an den Rotor (11) zu schalten, wenn der Sollwert der Rotorstromfrequenz bzw. mechanischen Rotordrehzahl nicht stationär in das momentane minimierte unzulässige synchrone Totband ($[-\Delta f, \Delta f]$; $[n_0-\Delta n, n_0+\Delta n]$) fällt.

13. System nach Anspruch 12, wobei zu der einen oder den mehreren einen momentanen Zustand des Pumpspeicherkraftwerks (1) kennzeichnenden Größen eine oder mehrere der Größen Spannungen auf der Maschinenseite des Umrichters (8), Ströme auf der Maschinenseite des Umrichters (8), Rotorstromfrequenz, Leistungsfaktor auf der Maschinenseite des Umrichters (8), Spannung ($U_{DC}$) an einem Gleichspannungszwischenkreis (17) des Umrichters (8), Pulsmuster zur Ansteuerung des Umrichters (8), Taktfrequenz zur Ansteuerung des Umrichters (8), Umgebungstemperatur des Umrichters (8), Kühlwassertemperatur und -durchfluss bei Wasserkühlung des Umrichters (8) gehören und die Steuereinrichtung (39) eingerichtet ist, um den momentanen Zustand des Pumpspeicherkraftwerks (1) anhand Beziehungen zwischen den einen momentanen Zustand des Pumpspeicherkraftwerks (1) kennzeichnenden Größen und dem unzulässigen synchronen Totband zu bestimmen, wobei die Beziehungen als Funktionen, Nachschlagetabellen oder implementierte Algorithmen in einem Speicher (41) vorabgespeichert sind.

14. System nach Anspruch 12 oder 13, wobei die Steuereinrichtung (39) eingerichtet ist, um in dem Fall, dass der ermittelte Sollwert der Rotorstromfrequenz bzw. mechanischen Rotordrehzahl in das unzulässige synchrone Totband ($[-\Delta f, \Delta f]$; $[n_0-\Delta n, n_0+\Delta n]$) fällt, eine Abhilfemaßnahme zur Vermeidung eines Betriebs innerhalb des Totbandes einzuleiten, wobei zu der Abhilfemaßnahme eine Reduzierung des synchronen Totbandes durch Veränderung des Zustands des Pumpspeicherkraftwerks (1) gehört, wozu die Steuereinrichtung (39) zur Bewirkung einer oder mehrerer der folgenden Maßnahmen eingerichtet ist:

Verringerung einer Taktfrequenz zur Ansteuerung des Umrichters (8),
Wechseln des Pulsmusters zur Ansteuerung des Umrichters,
Verringerung einer Spannung ($U_{DC}$) an einem Gleichspannungszwischenkreis (17) des Umrichters (8),
Reduzierung der geregelten Blindleistung des Umrichters (8),
Veränderung einer Kühlwassertemperatur, eines Kühlwasserdurchflusses oder von beiden bei Wasserkühlung des Umrichters (8), und
Verringerung der Umgebungstemperatur in einem Umrichterraum (36) durch Erhöhung der Kühlleistung einer Luftkühlanlage (37) .

15. System nach Anspruch 14, wobei die einzuleitende Abhilfemaßnahme zur Vermeidung eines Betriebs innerhalb des Totbandes in Abhängigkeit von einem empfangenen externen Präferenzsignal oder einem vorabgespeicherten internen Präferenzparameter (51) ausgewählt wird.

16. System nach einem beliebigen der Ansprüche 12-15, wobei der Umrichter (8) einen netzseitigen Teilumrichter (14) und einen maschinenseitigen Teilumrichter (13) aufweist, die über einen Gleichspannungszwischenkreis (17) miteinander verbunden sind, wobei die Steuereinrichtung (39) eingerichtet ist, um die doppelt gespeiste Asynchronmaschine (4) mit reduziertem synchronen Totband durch Reduktion der durch den maschinenseitigen Teilumrichter (13) geregelten Blindleistung zu betreiben und den reduzierten verfügbaren Blindleistungsbereich durch eine modifizierte Ansteuerung des netzseitigen Teilumrichters (14) zu kompensieren.

17. System nach einem beliebigen der Ansprüche 12-16, wobei das Pumpspeicherkraftwerk (1) eine erste doppelt gespeiste Asynchronmaschine (4a), die über einen ersten Umrichter (8) mit dem elektrischen Netz (2) verbunden und mit einer ersten Pumpen-/Turbineneinrichtung (3a) antriebsmäßig gekoppelt ist, und wenigstens eine zweite doppelt gespeiste Asynchronmaschine (4b), die über einen zweiten Umrichter (8) mit dem elektrischen Netz (2) verbunden und mit einer zweiten Pumpen-/Turbineneinrichtung (3b) antriebsmäßig gekoppelt ist, aufweist und wobei die Steuereinrichtung (39) eine erste Steuereinheit (39a), die der ersten doppelt gespeisten Asynchronmaschine (4a) zugeordnet ist, und wenigstens eine zweite Steuereinheit (39b) aufweist, die der wenigstens einen zweiten doppelt gespeisten Asynchronmaschine (4b) zugeordnet ist, wobei die erste und die zweite Steuereinheit (39a, 39b) direkt oder über eine übergeordnete Optimierungseinrichtung (43) miteinander kommunikationsmäßig verbunden und dazu eingerichtet sind, um bedarfsweise zu bewirken:

dass wenigstens eine der doppelt gespeisten Asynchronmaschinen (4a, 4b) durch Veränderung des Zustands des Pumpspeicherkraftwerks (1) mit reduziertem synchronen Totband ($[-\Delta f, \Delta f]$; $[n_0-\Delta n, n_0+\Delta n]$) betrieben wird, während wenigstens eine der anderen doppelt gespeisten Asynchronmaschinen in einem normalen Betriebsmodus betrieben wird; oder
dass eine von dem elektrischen Netz (2) vorgegebene Wirk- und/oder Blindleistungsanforderung asymmetrisch auf die erste und die wenigstens eine zweite doppelt gespeiste Asynchronmaschine (4a, 4b) verteilt wird, um einen Betrieb der doppelt gespeisten Asynchronmaschinen (4a, 4b) in einem unzulässigen synchronen Totband ($[-\Delta f, \Delta f]$; $[n_0-\Delta n, n_0+\Delta n]$) zu vermeiden; oder beides.

## Claims

1. Method for operating a pumped storage power plant with a double-fed induction machine (4) including a stator (9), which is directly connected to an electrical grid (2), and a rotor (11), which is directly connected to an electrical grid (2) via a converter (8), wherein the method includes:

determining a current target value for the rotor current frequency or a mechanical speed (n) of the rotor (11) based on a target power to be transmitted between the electrical grid (2) and the double-fed induction machine (4) depending on measured current operating variables,

determining one or more variables characterising a current state of the pumped storage power plant (1);

determining a current inadmissible synchronous deadband ($[-\Delta f, \Delta f]$; $[n_0-\Delta n, n_0+\Delta n]$), which is determined by a minimal rotor current frequency ($\Delta f$) required for the stationary operation or speed difference ($\Delta n$) of the rotor speed from the synchronous speed ($n_0$), depending on the one or more variables characterising the current state of the pumped storage power plant (1) in such a way that the current inadmissible synchronous deadband ($[-\Delta f, \Delta f]$; $[n_0-\Delta n, n_0+\Delta n]$) is minimised according to the current state of the pumped storage power plant (1); and

controlling the converter (8) in order to switch pulse-like sinusoidal voltages and currents with the current target value of the rotor current frequency to the rotor (11), if the current target value of the rotor current frequency or mechanical rotor speed does not fall in a stationary manner into the current inadmissible synchronous deadband ($[-\Delta f, \Delta f]$; $[n_0-\Delta n, n_0+\Delta n]$).

2. Method according to claim 1, wherein the target value of the rotor frequency and/or the mechanical speed and/or the minimum required rotor frequency or mechanical speed for stationary operation are determined depending on one or more of the following measured current operating variables: currents ($i_s$) in the stator circuit (24), voltages ($u_s$) in the stator circuit (24), currents ($i_R$) on the grid side in a rotor circuit (12), and rotor speed (n).

3. Method according to claim 1 or 2, wherein the one or more variables characterising a current state of the pumped storage power plant (1) are detected and/or determined continuously or periodically.

4. Method according to any of the preceding claims, wherein the one or more variables characterising a current state of the pumped storage power plant (1) include one or more of the following variables: voltages on the machine side of the converter (8), currents on the machine side of the converter (8), rotor current frequency, power factor on the machine side of the converter (8), voltage ($U_{DC}$) on a DC voltage intermediate circuit (17) of the converter (8), pulse pattern for the control of the converter (8), clock frequency for the control of the converter (8), ambient temperature of the converter (8), cooling water temperature and/or flow rate for water cooling of the converter (8).

5. Method according to claim 4, wherein the current state of the pumped storage power plant (1) is further determined taking into account fixed influencing variables, which include one or more of the following: type of the semiconductor switches used in the converter (8), dimensioning of the converter (8), power semiconductor circuits used and/or thermal resistances and thermal capacities within the components.

6. Method according to claim 4 or 5, wherein relationships between the variables characterising a current state of the pumped storage power plant (1) and the inadmissible synchronous deadband are stored in advance as functions, look-up tables or implemented algorithms, and are used during operation.

7. Method according to any of the preceding claims, wherein a fixed synchronous deadband is predetermined in advance and a current synchronous deadband is determined only in the event that the current target value of the rotor current frequency or the mechanical speed falls into the predetermined synchronous deadband.

8. Method according to any of the preceding claims, wherein in the event that the current target value of the rotor current frequency or the mechanical speed falls into the inadmissible synchronous deadband ($[-\Delta f, \Delta f]$; $[n_0-\Delta n, n_0+\Delta n]$), a remedial measure is initiated to avoid an operation within the deadband and/or this case is reported to a higher-level control, wherein the remedial measure includes a reduction of the current synchronous deadband ($[-\Delta f, \Delta f]$; $[n_0-\Delta n, n_0+\Delta n]$) by changing the state of the pumped storage power plant (1) by means of one or more of the following measures:

reducing a clock frequency for the control of the converter (8),

changing the pulse pattern for the control of the converter (8),

reducing a voltage ($U_{DC}$) on a DC voltage intermediate circuit (17) of the converter (8),

reducing the controlled reactive power of the converter (8),

changing a cooling water temperature, a cooling water flow rate, or both for water cooling of the converter (8), and

reducing the ambient temperature in a converter chamber (36) using an air cooling system (37).

9. Method according to claim 8, wherein the remedial measure to be initiated to avoid an operation within the inadmissible synchronous deadband is selected depending on a preference signal or parameter (51).

10. Method according to claim 8 or 9, wherein the remedial measure to be initiated to avoid an operation within the deadband is determined by comparing various possible remedial measures, taking into account their effects on the inadmissible synchronous deadband ($[-\Delta f, \Delta f]$; $[n_0-\Delta n, n_0+\Delta n]$).

11. Method according to any of claims 8-10, which further includes compensatory measures to mitigate impairments associated with the remedial measure(s), wherein the compensatory measures include one or more of the following measures:

changing the clock frequency, the pulse pattern for the control of the converter (8), or both, to reduce the harmonics and/or current ripples,
compensation of a smaller available reactive power range by using a grid-side partial converter (14) of the converter (8), and
compensation of a smaller available reactive power range, a reduced active power in a double-fed induction machine (4a) using at least one further double-fed induction machine (4b).

12. System for operating a pumped storage power plant (1) with a double-fed induction machine (4) including a stator (9), which is directly connected to an electrical grid (2), and a rotor (11), which is directly connected to an electrical grid (2) via a converter (8), and with a pumping/turbine device (3), which is drivingly connected to a double-fed induction machine (4), wherein the system includes:

a sensor device (38) for measuring current operating variables, including currents ($i_s$, $i_R$) and voltages ($u_s$) in a stator circuit (24) and a rotor circuit (12); and
a control device (38) for the control of the operation of the pumped storage power plant (1), which is communicatively connected to the sensor device (38) and is set up to
determine a current target value for a rotor current frequency or a mechanical speed of the rotor based on a target power to be transmitted between the electrical grid (2) and the double-fed induction machine (4) depending on the measured current operating variables,
to determine one or more variables characterising a current state of the pumped storage power plant (1),
to determine a current inadmissible synchronous deadband ($[-\Delta f, \Delta f]$; $[n_0-\Delta n, n_0+\Delta n]$), which is determined by an admissible minimum required rotor current frequency ($\Delta f$) or speed difference ($\Delta n$) of the rotor speed from the synchronous speed ($n_0$) for the stationary operation, depending on the one or more variables characterising the current state of the pumped storage power plant (1), in such a way that the current inadmissible synchronous deadband ($[-\Delta f, \Delta f]$;

$[n_0-\Delta n, n_0+\Delta n]$) is minimised according to the current state of the pumped storage power plant (1), and
to control the converter (8) in order to switch pulse-like sinusoidal voltages and currents with the current target value of the rotor current frequency to the rotor (11), if the current target value of the rotor current frequency or mechanical rotor speed does not fall in a stationary manner into the current inadmissible synchronous deadband ($[-\Delta f, \Delta f]$; $[n_0-\Delta n, n_0+\Delta n]$).

13. System according to claim 12, wherein the one or more variables characterising a current state of the pumped storage power plant (1) include one or more of the following variables: voltages on the machine side of the converter (8), currents on the machine side of the converter (8), rotor current frequency, power factor on the machine side of the converter (8), voltage ($U_{DC}$) on a DC voltage intermediate circuit (17) of the converter (8), pulse pattern for the control of the converter (8), clock frequency for the control of the converter (8), ambient temperature of the converter (8), cooling water temperature and/or flow rate for water cooling of the converter (8), and the control device (39) is set up to determine the current state of the pumped storage power plant (1) based on relationships between the variables characterising the one current state of the pumped storage power plant (1) and the inadmissible synchronous deadband, wherein the relationships can be stored in advance in a memory (41) as functions, look-up tables or implemented algorithms.

14. System according to claim 12 or 13, wherein in the event that the determined target value of the rotor current frequency or mechanical rotor speed falls into the inadmissible synchronous deadband ($[-\Delta f, \Delta f]$; $[n_0-\Delta n, n_0+\Delta n]$) the control device (39) is set up to initiate a remedial measure to avoid an operation within the deadband, wherein the remedial measure comprises a reduction of the synchronous deadband by changing the state of the pumped storage power plant (1), and for this purpose the control device (39) is set up to implement one or more of the following measures:

reducing a clock frequency for the control of the converter (8),
changing the pulse pattern for the control of the converter,
reducing a voltage ($U_{DC}$) on a DC voltage intermediate circuit (17) of the converter (8),
reducing the controlled reactive power of the converter (8),
changing a cooling water temperature, a cooling water flow rate, or both for water cooling of the converter (8), and

reducing the ambient temperature in a converter chamber (36) by increasing the cooling power of an air cooling system (37).

15. System according to claim 14, wherein the remedial measure to be initiated to avoid an operation within the inadmissible synchronous deadband is preferably selected depending on a received external preference signal or a previously stored internal preference parameter (51).

16. System according to any of claims 12-15, wherein the converter (8) includes a grid-side partial converter (14) and a machine-side partial converter (13), which are connected to one another via a DC voltage intermediate circuit (17), wherein the control device (39) is set up to operate the double-fed induction machine (4) by reduction of the reactive power controlled by the machine-side partial converter (13) with reduced synchronous deadband and to compensate for the reduced available reactive power range by a modified control of the grid-side partial converter (14).

17. System according to any of claims 12-16, wherein the pumped storage power plant (1) includes a first double-fed induction machine (4a) which is connected to the electrical grid (2) via a first converter (8) and is drivingly coupled to a first pumping/turbine device (3a), and at least one second double-fed induction machine (4b), which is connected to the electrical grid (2) via a second converter (8) and is drivingly coupled to a second pumping/turbine device (3b), wherein the control device (39) includes a first control unit (39a) associated with the first double-fed induction machine (4a) and at least one second control unit (39a), which is associated with the at least one second double-fed induction machine (4b), wherein the first and the second control units (39a, 39b) are communicatively connected to one another directly or via a higher-level optimisation device (43) and are set up to effect as needed:

that at least one of the double-fed induction machines (4a, 4b) is operated with reduced synchronous deadband ([-$\Delta$f, $\Delta$f]; [n 0 -$\Delta$n, n 0 +$\Delta$n]) by changing the state of the pumped storage power plant (1), while at least one of the other double-fed induction machines is operated in a normal operating mode; or
that an active power and/or reactive power requirement predetermined by the electrical grid (2) is distributed asymmetrically to the first and the at least one second double-fed induction machine (4a, 4b) to avoid an operation of the double-fed induction machines (4a, 4b) in an inadmissible deadband ([-$\Delta$f, $\Delta$f]; [n$_0$-$\Delta$n, n$_0$+$\Delta$n]); or both.

## Revendications

1. Procédé de fonctionnement d'une centrale de pompage-turbinage avec une machine asynchrone à double alimentation (4), qui présente un stator (9) qui est directement connecté à un réseau électrique (2) et un rotor (11) qui est connecté au réseau électrique (2) par l'intermédiaire d'un variateur (8), dans lequel le procédé consiste à :

déterminer une valeur de consigne actuelle pour une fréquence de courant de rotor ou une vitesse de rotation mécanique (n) du rotor (11) sur la base d'une puissance de consigne à transmettre entre le réseau électrique (2) et la machine asynchrone à double alimentation (4) en fonction de grandeurs de fonctionnement actuelles mesurées ;
déterminer une ou plusieurs grandeurs caractérisant un état instantané de la centrale de pompage-turbinage (1) ;
déterminer une bande morte synchrone non admissible instantanée ([-$\Delta$f, $\Delta$f] ; [n$_0$-$\Delta$n, n$_0$+$\Delta$n]) qui est déterminée par une fréquence de courant de rotor ($\Delta$f) ou différence de vitesse de rotation ($\Delta$n) minimale requise pour le fonctionnement stationnaire de la vitesse de rotation de rotor par rapport à la vitesse de rotation synchrone (n$_0$), en fonction de l'une ou des plusieurs grandeurs caractérisant l'état instantané de la centrale de pompage-turbinage (1), de sorte que la bande morte synchrone actuelle non admissible instantanée ([-$\Delta$f, $\Delta$f] ; [n$_0$-$\Delta$n, n$_0$+$\Delta$n]) soit minimisée en fonction de l'état actuel de la centrale de pompage-turbinage (1) ; et
commander le variateur (8) afin d'impulser des tensions et courants sinusoïdaux au rotor (11) avec la valeur de consigne actuelle de la fréquence de courant de rotor lorsque la valeur de consigne actuelle de la fréquence de courant de rotor ou vitesse de rotation de rotor mécanique tombe de manière non stationnaire dans la bande morte synchrone non admissible minimisée instantanée ([-$\Delta$f, $\Delta$f] ; [n$_0$-$\Delta$n, n$_0$+$\Delta$n]).

2. Procédé selon la revendication 1, dans lequel la valeur de consigne de la fréquence de rotor ou de la vitesse de rotation mécanique et/ou la fréquence de rotor ou vitesse de rotation mécanique minimale requise admissible pour le fonctionnement stationnaire est déterminée en fonction d'une ou de plusieurs des grandeurs de fonctionnement actuelles mesurées suivantes : courants (i$_S$) dans un circuit de stator (24), tensions (u$_S$) dans le circuit de stator (24), courants (i$_R$) du côté réseau dans un circuit de rotor (12) et vitesse de rotation de rotor (n).

3. Procédé selon la revendication 1 ou 2, dans lequel l'une ou les plusieurs grandeurs caractérisant un état instantané de la centrale de pompage-turbinage (1) sont détectées ou déterminées de manière continue ou périodique.

4. Procédé selon l'une quelconque des revendications précédentes, dans lequel l'une ou les plusieurs grandeurs caractérisant un état instantané de la centrale de pompage-turbinage (1) comprennent une ou plusieurs des grandeurs suivantes : tensions du côté machine du variateur (8), courants du côté machine du variateur (8), fréquence de courant du rotor, facteur de puissance du côté machine du variateur (8), tension ($U_{DC}$) sur un circuit intermédiaire à tension continue (17) du variateur (8), schéma d'impulsions pour commander le variateur (8), fréquence d'horloge pour commander le variateur (8), température ambiante du variateur (8), température et/ou débit d'eau de refroidissement en cas de refroidissement par eau du variateur (8).

5. Procédé selon la revendication 4, dans lequel l'état actuel de la centrale de pompage-turbinage (1) est en outre déterminé en tenant compte de grandeurs d'influence fixes, qui comprennent un ou plusieurs des suivants : type des commutateurs à semi-conducteurs utilisés dans le variateur (8), puissance du variateur (8), circuits à semi-conducteurs utilisés et résistances thermiques et capacités thermiques à l'intérieur des composants.

6. Procédé selon la revendication 4 ou 5, dans lequel des relations entre les grandeurs caractérisant un état instantané de la centrale de pompage-turbinage (1) et la bande morte synchrone non admissible sont stockées à l'avance en tant que fonctions, tables de consultation ou algorithmes mis en œuvre et sont utilisées en fonctionnement.

7. Procédé selon l'une quelconque des revendications précédentes, dans lequel une bande morte synchrone fixe est prédéterminée à l'avance et une bande morte synchrone instantanée est déterminée uniquement dans le cas où la valeur de consigne actuelle de la fréquence de courant de rotor ou de la vitesse de rotation mécanique tombe dans la bande morte synchrone prédéterminée.

8. Procédé selon l'une quelconque des revendications précédentes, dans lequel, dans le cas où la valeur de consigne actuelle de la fréquence de courant de rotor ou de la vitesse de rotation mécanique tombe dans la bande morte synchrone non admissible ($[-\Delta f, \Delta f]$ ; $[n_0-\Delta n, n_0+\Delta n]$), une mesure corrective pour empêcher le fonctionnement au sein de la bande morte est initiée et/ou ce cas est signalé à une commande en amont,
dans lequel la mesure corrective présente une réduction de la bande morte synchrone ($[-\Delta f, \Delta f]$ ; $[n_0-\Delta n, n_0+\Delta n]$) en changeant l'état de la centrale de pompage-turbinage (1) à l'aide d'une ou plusieurs des mesures suivantes consistant à :

réduire une fréquence d'horloge pour commander le variateur (8),
changer le schéma d'impulsions pour commander le variateur (8),
réduire une tension ($U_{DC}$) sur un circuit intermédiaire à tension continue (17) du variateur (8),
réduire la puissance réactive régulée du variateur (8),
changer une température d'eau de refroidissement, un débit d'eau de refroidissement ou les deux lors du refroidissement par eau du variateur (8), et
réduire la température ambiante dans une salle de variateurs (36) en utilisant un système de refroidissement par air (37).

9. Procédé de la revendication 8, dans lequel la mesure corrective à prendre pour empêcher un fonctionnement dans la bande morte est sélectionnée en fonction d'un signal ou paramètre de préférence (51).

10. Procédé selon la revendication 8 ou 9, dans lequel la mesure corrective à prendre pour empêcher un fonctionnement dans la bande morte est déterminée en comparant différentes mesures correctives possibles en tenant compte de leurs effets sur la bande morte synchrone non admissible ($[-\Delta f, \Delta f]$ ; $[n_0-\Delta n, n_0+\Delta n]$).

11. Procédé selon l'une quelconque des revendications 8-10, qui présente en outre des mesures compensatoires pour atténuer les déficiences associées à la ou aux mesures correctives, dans lequel les mesures compensatoires comprennent une ou plusieurs des mesures suivantes consistant à :

modifier la fréquence d'horloge, le schéma d'impulsions pour commander le variateur (8), ou les deux, pour réduire les harmoniques et/ou ondulations résiduelles,
compenser une plage de puissance réactive disponible plus petite en utilisant un variateur partiel côté réseau (14) du variateur (8), et
compenser une plage de puissance réactive disponible plus petite, une puissance active réduite ou les deux dans une machine asynchrone à double alimentation (4a) en utilisant au moins une autre machine asynchrone à double alimentation (4b).

12. Système pour faire fonctionner une centrale de pompage-turbinage (1) avec une machine asynchrone à double alimentation (4) qui présente un stator (9) qui est directement connecté à un réseau électrique (2) et un rotor (11) qui est connecté au réseau électrique (2) par l'intermédiaire d'un variateur (8), et avec un dispositif de pompage-turbinage (3) qui est connecté en entraînement à la machine asynchrone à double alimentation (4), dans lequel le système présente :

un dispositif de détection (38) pour mesurer des grandeurs de fonctionnement actuelles comprenant des courants ($i_S$, $i_R$) et des tensions ($u_S$) dans un circuit de stator (24) et un circuit de rotor (12) ; et

un dispositif de commande (38) pour commander le fonctionnement de la centrale de pompage-turbinage (1), qui est connecté au dispositif de détection (38) par des moyens de communication et qui est configuré pour déterminer une valeur de consigne actuelle pour une fréquence de courant de rotor ou une vitesse de rotation mécanique du rotor sur la base d'une puissance de consigne à transmettre entre le réseau électrique (2) et la machine asynchrone à double alimentation (4) en fonction des grandeurs de fonctionnement actuelles mesurées,

déterminer une ou plusieurs grandeurs caractérisant un état instantané de la centrale de pompage-turbinage (1),

déterminer une bande morte synchrone non admissible instantanée ([$-\Delta f$, $\Delta f$] ; [$n_0-\Delta n$, $n_0+\Delta n$]) qui est déterminée par une fréquence de courant de rotor ($\Delta f$) ou différence de vitesse de rotation ($\Delta n$) minimale admissible requise pour le fonctionnement stationnaire de la vitesse de rotation de rotor par rapport à la vitesse de rotation synchrone ($n_0$), en fonction de l'une ou des plusieurs grandeurs caractérisant l'état instantané de la centrale de pompage-turbinage (1), de sorte que la bande morte synchrone actuelle non admissible instantanée ([$-\Delta f$, $\Delta f$] ; [$n_0-\Delta n$, $n_0+\Delta n$]) soit minimisée en fonction de l'état actuel de la centrale de pompage-turbinage (1), et commander le variateur (8) afin d'impulser des tensions et courants sinusoïdaux au rotor (11) avec la valeur de consigne de la fréquence de courant de rotor lorsque la valeur de consigne actuelle de la fréquence de courant de rotor ou vitesse de rotation de rotor mécanique tombe de manière non stationnaire dans la bande morte synchrone non admissible minimisée instantanée ([$-\Delta f$, $\Delta f$] ; [$n_0-\Delta n$, $n_0+\Delta n$]).

13. Système selon la revendication 12, dans lequel parmi l'une ou les plusieurs grandeurs caractérisant un état instantané de la centrale de pompage-turbinage (1), une ou plusieurs des grandeurs sont des tensions du côté machine du variateur (8), des courants du côté machine du variateur (8), une fréquence de courant de rotor, un facteur de puissance du côté machine du variateur (8), une tension ($U_{DC}$) sur un circuit intermédiaire à tension continue (17) du variateur (8), un schéma d'impulsions pour commander le variateur (8), une fréquence d'horloge pour commander le variateur (8), une température ambiante du variateur (8), une température et débit d'eau de refroidissement dans le cas d'un refroidissement par eau du variateur (8), et le dispositif de commande (39) est configuré pour déterminer l'état instantané de la centrale de pompage-turbinage (1) à l'aide de relations entre les grandeurs caractérisant un état instantané de la centrale de pompage-turbinage (1) et la bande morte synchrone non admissible, dans lequel les relations sont préenregistrées en tant que fonctions, tables de consultation ou algorithmes mis en œuvre dans une mémoire (41).

14. Système selon la revendication 12 ou 13, dans lequel le dispositif de commande (39) est configuré, dans le cas où la valeur de consigne déterminée de la fréquence de courant de rotor ou de la vitesse de rotation de rotor mécanique tombe dans la bande morte synchrone non admissible ([$-\Delta f$, $\Delta f$] ; [$n_0-\Delta n$, $n_0+\Delta n$]), pour initier une mesure corrective pour empêcher le fonctionnement au sein de la bande morte, dans lequel la mesure corrective comprend une réduction de la bande morte synchrone en changeant l'état de la centrale de pompage-turbinage (1), dans lequel le dispositif de commande (39) est configuré pour effectuer une ou plusieurs des mesures suivantes consistant à :

réduire une fréquence d'horloge pour commander le variateur (8),
changer le schéma d'impulsions pour commander le variateur,
réduire une tension ($U_{DC}$) sur un circuit intermédiaire à tension continue (17) du variateur (8),
réduire la puissance réactive régulée du variateur (8),
changer une température d'eau de refroidissement, un débit d'eau de refroidissement ou les deux lors du refroidissement par eau du variateur (8), et
réduire la température ambiante dans une salle de variateurs (36) en augmentant la capacité de refroidissement d'un système de refroidissement par air (37).

15. Système selon la revendication 14, dans lequel la mesure corrective à prendre pour empêcher un fonctionnement dans la bande morte est sélectionnée en fonction d'un signal de préférence externe reçu ou d'un paramètre de préférence interne préenregistré (51).

16. Système selon l'une quelconque des revendications 12-15, dans lequel le variateur (8) présente un variateur partiel côté réseau (14) et un variateur partiel côté machine (13), qui sont connectés l'un à l'autre par l'intermédiaire d'un circuit intermédiaire à tension continue (17), dans lequel le dispositif de commande (39) est configuré pour faire fonctionner la machine asynchrone à double alimentation (4) avec une bande morte synchrone réduite en réduisant la puissance réactive commandée par le variateur partiel côté machine (13) et pour compenser la plage de puissance réactive disponible réduite par une commande modifiée du variateur partiel côté réseau (14).

17. Système selon l'une quelconque des revendications 12-16, dans lequel la centrale de pompage-turbinage (1) présente une première machine asynchrone à double alimentation (4a), qui est connectée au réseau électrique (2) par l'intermédiaire d'un premier variateur (8) et couplée en entraînement à un premier dispositif de pompage-turbinage (3a), et au moins une seconde machine asynchrone à double alimentation (4b) qui est connectée au réseau électrique (2) par l'intermédiaire d'un second variateur (8) et couplée en entraînement à un second dispositif de pompage-turbinage (3b), et dans lequel le dispositif de commande (39) présente une première unité de commande (39a) qui est affectée à la première machine asynchrone à double alimentation (4a) et au moins une seconde unité de commande (39b) qui est affectée à l'au moins une seconde machine asynchrone à double alimentation (4b), dans lequel les première et seconde unités de commande (39a, 39b) sont connectées l'une à l'autre en communication directement ou par l'intermédiaire d'un dispositif d'optimisation en amont (43) et sont configurées pour assurer, comme requis :

qu'au moins une des machines asynchrones à double alimentation (4a, 4b) fonctionne avec une bande morte synchrone réduite ($[-\Delta f, \Delta f]$ ; $[n_0-\Delta n, n_0+\Delta n]$) en changeant l'état de la centrale de pompage-turbinage (1), pendant qu'au moins une des autres machines asynchrones à double alimentation fonctionne dans un mode de fonctionnement normal ; ou
en ce qu'une demande de puissance active et/ou réactive prédéterminée par le réseau électrique (2) est distribuée de manière asymétrique à la première et à l'au moins une seconde machine asynchrone à double alimentation (4a, 4b) pour empêcher le fonctionnement des machines asynchrones à double alimentation (4a, 4b) dans une bande morte synchrone non admissible ($[-\Delta f, \Delta f]$ ; $[n_0-\Delta n, n_0+\Delta n]$) ;
ou les deux.

FIG. 1

EP 3 444 937 B1

FIG. 2

```
                              ( START )
                                  │
    ┌─────────────────────────────┤
    │                             ▼
    │              ┌──────────────────────────────┐
    │              │  aktuelle Betriebsgrößen messen │ ──╮ S1
    │              └──────────────────────────────┘    │
    │                             │
    │                             ▼
    │              ┌──────────────────────────────┐
    │              │  aktuellen Rotorstromfrequenzsollwert │ ──╮ S2
    │              │  oder Drehzahlsollwert bestimmen │      │
    │              └──────────────────────────────┘
    │                             │
    │                             ▼
    │   S4                       ╱╲
    │   ╱                      ╱    ╲
┌────────────┐   nein      ╱  aktueller  ╲    ╮ S3
│ Umrichter mit │◄──────────   Rotorstromfrequenzsollwert  
│ Rotorfrequenz- │            bzw. Drehzahlsollwert
│ sollwert ansteuern │        innerhalb des vorgegebenen
└────────────┘             ╲  synchronen Totbands?  ╱
    ▲                         ╲              ╱
    │                           ╲    ╱
    │                            │ ja
    │                            ▼
    │              ┌──────────────────────────────┐
    │              │  momentanen Zustand des │ ──╮ S5
    │              │  Pumpspeicherkraftwerks bestimmen │
    │              └──────────────────────────────┘
    │                            │
    │                            ▼
    │              ┌──────────────────────────────┐
    │              │  momentanes synchrones Totband │ ──╮ S6
    │              │  basierend auf momentanem Zustand │
    │              │  des Pumpspeicherkraftwerks bestimmen │
    │              └──────────────────────────────┘
    │                            │
    │                            ▼
    │                           ╱╲
    │             nein        ╱    ╲   ╮ S7
    └──────────────────────   aktueller
                             Rotorstromfrequenzsollwert
                             bzw. Drehzahlsollwert innerhalb des
                           ╲  vorgegebenen synchronen Totbands?  ╱
                             ╲              ╱
                               ╲    ╱
                                │ ja
                                ▼
                   ┌──────────────────────────────┐
                   │  Betrieb innerhalb des momentanen │ ──╮ S8
                   │  synchronen Totbands vermeiden │
                   └──────────────────────────────┘
```

## FIG. 3

START

erste Abhilfemaßnahme zur Veränderung des Zustands des Pumpspeicherkraftwerks betrachten — S11

Präferenzsignal oder Präferenzparameter auswerten

Auswirkungen des Abhilfemaßnahme auf das synchrone Totband schätzen — S12

S18

weitere Abhilfemaßnahmen vorhanden? — S13

nein

Abhilfemaßnahme wählen

S19

S14

ja

nächste Abhilfemaßnahme betrachten

wirksame Abhilfemaßnahme(n) wählen und ergreifen — S15

momentanes synchrones Totband basierend auf momentanem Zustand des Pumpspeicherkraftwerks bestimmen — S6

aktueller Rotorstromfrequenzsollwert bzw. Drehzahlsollwert innerhalb des momentanen synchronen Totbands? — S7

ja

nein

S16

S4

alternative Strategie wählen

Umrichter mit Rotorfrequenzsollwert ansteuern

S17 — Ausgleichsmaßnahmen einleiten

# FIG. 4

FIG. 5

EP 3 444 937 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140361718 A1

- JP 2002272191 A

**In der Beschreibung aufgeführte Nicht-Patentliteratur**

- **TAN YINGJIE et al.** Deadband Control of Doubly-Fed Induction Generator around Synchronous Speed. *IEEE Transactions on Energy Conversion,* Dezember 2016, vol. 31 (4), 1610-1621

- **TAN YINGJIE et al.** *Deadband Control of Doubly-Fed Induction Generator around Synchronous Speed*